# EUROPEAN PATENT APPLICATION

(11) **EP 4 729 418 A1**
(43) Date of publication of application: **22.04.2026**
(21) Application number: 24425049.4
(22) Date of filing: 15.10.2024
(51) Int. Cl.: B64D 43/00, B64C 27/12, B64D 31/09, B64D 31/18, B64D 35/025

(54) **A METHOD OF CONTROLLING A HELICOPTER, A HUMAN-MACHINE INTERFACE FOR A HELICOPTER AND A HELICOPTER**

(71) Applicant: Leonardo S.p.a., 00195 Roma (IT)
(72) Inventor: Brunetti, Massimo, 21017 SAMARATE (VA) (IT); Ferro, Piergiorgio, 21017 SAMARATE (VA) (IT); Nesci, Andrea, 21017 SAMARATE (VA) (IT); Pizzagalli, Matteo, 21017 SAMARATE (VA) (IT); Hupfer, Christopher, 21017 SAMARATE (VA) (IT)
(74) Representative: Studio Torta S.p.A.

(57) **Abstract**

There is disclosed a method of controlling a helicopter (1) comprising: at least one thermal engine (11); at least one rotor (3), which is operatively connectable to thermal engine (11) to be drive, in use, at a set rotational speed (ω_{SET}); an emergency system (40) comprising: at least one electric motor (41), which is operatively connectable to rotor (3) and an electrical power source (42), which is electrically connected to electric motor (41); the method comprises the steps of i) operatively connecting thermal engine (11) to rotor (3) and keeping electric motor (41) disconnected by rotor (3) or idle, in a normal operating condition of thermal engine (11); ii) detecting if thermal engine (11) is in at least partial failure condition; iii) accelerating electric motor (41) up to when said current rotational speed (ω) equals set value (ω_{SET}), in case of at least partial failure of said thermal engine (11); step iii) comprises the steps of iv) sensing a plurality of parameters (ω, ω_{ERR}, ϕ, ϕ_{ERR}, IIT, τ_{τ/s}, τ_{MGB}, Power_{τ/s}, Power_{MGB}) of thermal engine (11) and rotor (3); and v) identifying an at least partial failure of thermal engine (11), on the basis of parameters (ω, ω_{ERR}, ϕ, ϕ_{ERR}, IIT, τ, P. (Figure 1)

## Description

The present invention relates to a method of controlling a helicopter.

The present invention also relates to a human-machine interface for a helicopter.

The present invention finally relates to a helicopter.

Helicopters are known with a single engine or multiple engines, and a main and tail rotor driven in rotation by the single or multiple engine(s).

The single-engine helicopters are, on one hand, particularly advantageous in terms of lower pollutant emissions and cost when compared to multiple-engines helicopters.

However, when compared to multiple-engines helicopters, the single-engine helicopters have a reduced safety and so operative envelopes for safety reasons, especially during the most demanding manoeuvres like for example the take-off and the landing.

US-B-8,464,980 discloses a helicopter power plant with a single engine together with both a main gearbox suitable for driving the main rotor of the helicopter and a tail gearbox suitable for driving an anti-torque rotor of the helicopter. The power plant further comprises a first electric motor mechanically connected to the main gearbox in order to be capable of driving the main gearbox, and a second electric motor mechanically connected to the tail gearbox in order to be capable of driving the tail gearbox.

In this way, in case of failure of the single engine, the propulsive system can ensure the driving in rotation of the main and tail gearbox and that the flight performance of the helicopter is not degraded.

EP-B-4087782 discloses a single engine helicopter with a thermal combustion engine and an electric engine.

A need is felt within the industry to increase the safety and the operative envelope of the single-engine helicopters, without increasing their pollutant emission and costs.

In greater detail, a need is felt within the industry to reduce the required safe take-off/landing area and allow single-engine helicopter commercial operation above congested areas.

It is an object of the present invention to provide a method for controlling a helicopter, which allows to meet at least one of the above-identified needs.

This object is achieved by the present invention, as it relates to a method of controlling a helicopter according to claim 1.

The present invention also relates to a human-machine interface for a helicopter, according to claim 13.

Finally, the present invention relates to a helicopter according to claim 17.

One preferred embodiment is hereinafter described for a better understanding of the present invention, by the way of a non-limitative example and with reference to the accompanying drawings in which:
- Figure 1 is a schematic shown of a propulsion unit of a helicopter according to the invention, with parts removed for clarity;
- Figure 2 schematically shows a flow-chart of the operative steps of a method for controlling of the helicopter of Figure 1, according to the present invention;
- Figure 3 schematically shows an operative step of the method of Figure 2;
- Figures 4 to 6 show the operative parameters of a take-off manoeuvre of the helicopter of Figure 1 in a clear area in respective different operative conditions;
- Figures 7 to 9 show the operative parameters of a take-off manoeuvre of the helicopter of Figure 1 in a confined area in respective different operative conditions;
- Figures 10 and 11 show the variation of some parameters of the helicopter of Figure 1alongside the time, respectively in case of in-flight shut-down of thermal engine and in case of thermal engine partial power loss;
- Figure 12 shows a human-machine interface of the helicopter of Figure 1, according to the present invention; and
- Figure 13 shows a possible evolution of a generic feature of a physical model of a thermal engine of the propulsion unit of Figure 1 alongside the time.

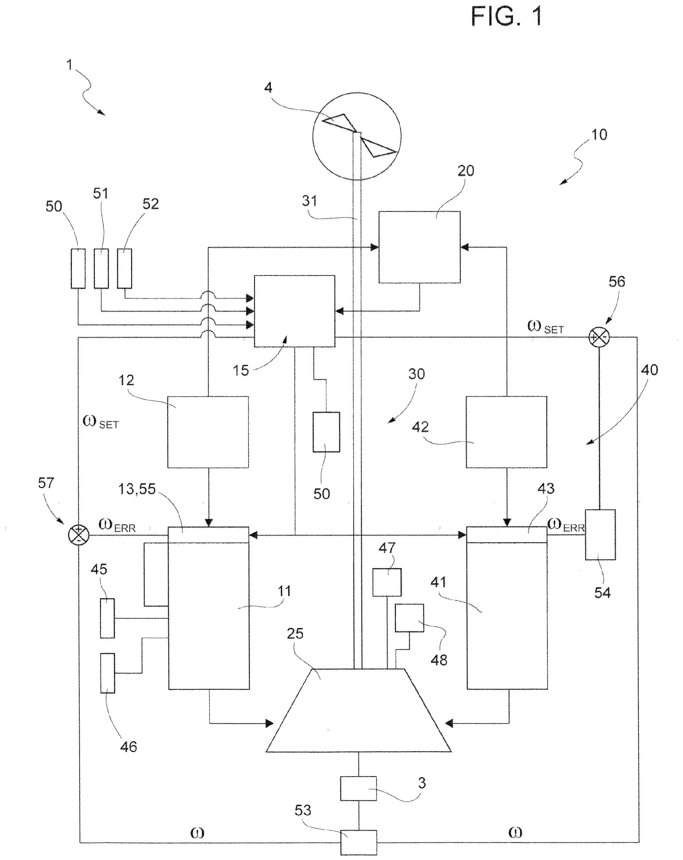

With reference to Figure 1, reference number 1 indicates a helicopter.

Still more precisely, helicopter 1 is a single-engine helicopter and comprises, in a known way, a not-shown fuselage.

Helicopter 1 is schematically illustrated in Figure 1 limitedly to:
- a main rotor 3, which is adapted to provide the lift necessary to the flight of helicopter 1; and
- a tail rotor 4, which is adapted to counter-act the torque exerted by main rotor 3 to fuselage.

Helicopter 1 comprises:
- a propulsion unit 10;
- a control unit 15 for controlling propulsion unit 10;
- an avionic unit 20 adapted to set a required rotational speed ω_{SET} for rotor 3;
- a gearbox 25, which is driven by propulsion unit 10 and drives main rotor 3; and
- a further gearbox 30 which is shown limitedly to a shaft 31, is driven by gearbox 25 and drives in rotation tail rotor 4.

In one embodiment, avionic unit 20 is embedded in control unit 15.

Propulsion unit 10 comprises, in turn:
- a thermal engine 11, e.g. a turboshaft engine, which outputs a torque τ_{T/S};
- a fuel system 12, which is controlled by avionic unit 20 for feeding thermal engine 11 with a desired amount of fuel; and
- a FADEC 13, which is controlled by control unit 15.

Helicopter 1 further comprises an emergency power system 40.

Emergency power system 40 comprises, in turn:
- a power electronic unit 43, which is controlled by control unit 15;
- an electric motor 41 controlled by power electronic unit 43 and which outputs a torque τ_{ES}; and
- a source 42 of electric energy, a battery in the embodiment shown, electrically connected to electric motor 41.

In particular, power electronic unit 43 controls the amount of electrical power fed to electric motor 41 by source 42.

Control unit 15 is programmed to operatively connect thermal engine 11 to rotor 3 and to keep electric motor 41 disconnected by rotor 3 or idle, in a normal operating condition of thermal engine 11.

Advantageously, control unit 15 is further programmed to:
- detect if thermal engine 11 is in an at least partial failure condition;
- accelerating electric motor 41 up to when current rotational speed ω of rotor 3 equals set value ω_{SET}, in case of at least partial failure of thermal engine 11;

control unit 15 is, in particular, programmed to sense a plurality of parameters ω, ω_{ERR}, ϕ, ϕ_{ERR}, IIT, τ_{T/S}, τ_{MGB}, Pτ_{/s} P_{MGB} of thermal engine 11 and rotor 3; and
identifying an at least partial failure of thermal engine, on the basis of previously indicated (ω), ω_{ERR}, ϕ, ϕ_{ERR}, IIT, τ_{T/S}, τ_{MGB}, Pτ_{/s} P_{MGB} or few of them ω, ω_{ERR}, ϕ, ϕ_{ERR} as described in detail hereafter.

Parameters ω, ω_{ERR}, ϕ, ϕ_{ERR}, IIT, τ_{T/S}, τ_{MGB}, Pτ_{/s} P_{MGB} include among the others:
- a current rotational speed of thermal engine 11 and a current rotational speed ω of rotor 3;
- a difference ω_{ERR} between the current rotational speed ω and set value ω_{SET} and rotor 3, and a further difference between current rotational speed and a set value of the rotational speed of thermal engine 11;
- a time derivative ϕ of speed ω of the thermal engine 11 and rotor 3;
- a time derivative ϕ_{ERR} of difference ω_{ERR} and a time derivative of the further difference between current rotational speed and a set value of the rotational speed of thermal engine 11;
- a temperature IIT of thermal engine 11;
- a torque τ_{τ/s} provided by thermal engine 11;
- a torque τ_{MGB} available at the gearbox 25; and
- a power P_{τ/s} provided by thermal engine 11; and
- a power P_{MGB} available at the gearbox 25.

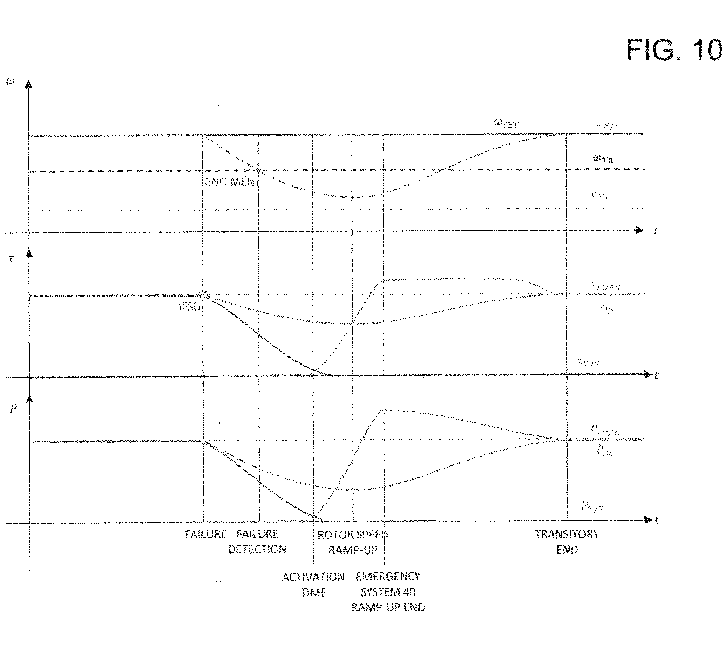

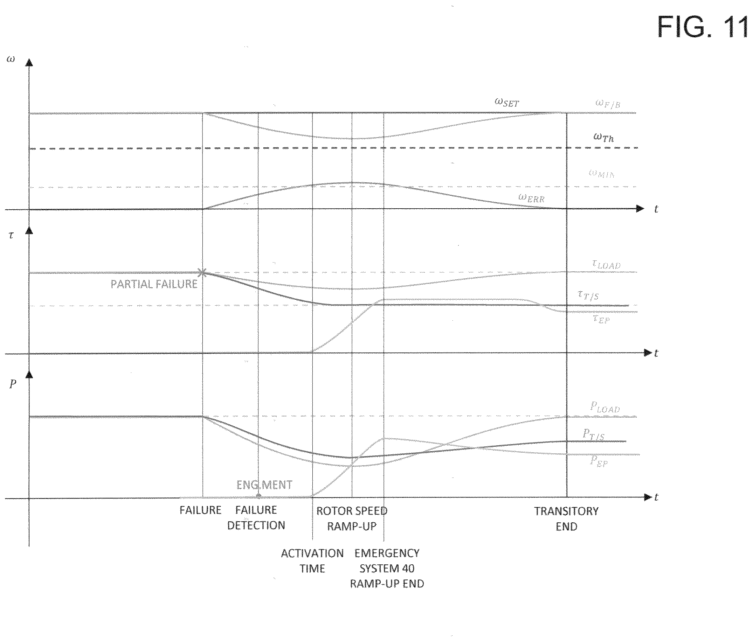

In greater detail, control unit 15 is programmed to:
- identify a complete in-flight shut down of thermal engine 11 in case the absolute value of time derivatives ϕ (ϕ_{ERR}) is higher than a threshold value ϕ_{ERRTH} or in case of current rotational speed ω (ω_{ERR}) is lower than a threshold value ω_{TH} (ω_{ERRTH}) (Figure 10); or
- identifying a partial loss of power of said thermal engine 11, on the basis of a temporal variation of the current values of difference ω, ω_{ERR}, ϕ, ϕ_{ERR}, temperature IIT, torque τ_{τ/s} and τ_{MGB}, and power P_{τ/s} and P_{MGB} (Figure 11) .

In particular, control unit 15 is programmed to identify a partial loss of power of thermal engine 11 on the basis of the following, non limiting examples combination of the above-identified parameters:
- ϕ_{ERR} not strictly positive, and torque τ_{T/S} (power P_{T/S}) of thermal engine 11 lower than a maximum value τ_{T/SMAX} (P_{T/SMAX}) function of outside pressure PALT, and outside temperature OAT, for an overall time ΔT greater than a predefined time ΔT_{TH} function of temperature IIT;
- ωERR greater than a threshold value ω_{ERRTH}, and torque τ_{T/S} (power P_{T/S}) of thermal engine 11 lower than a maximum value τ_{T/SMAX} (P_{T/SMAX}) function of outside pressure PALT, and outside temperature OAT, for an overall time ΔT greater than a predefined time ΔT_{TH} function of temperature IIT.

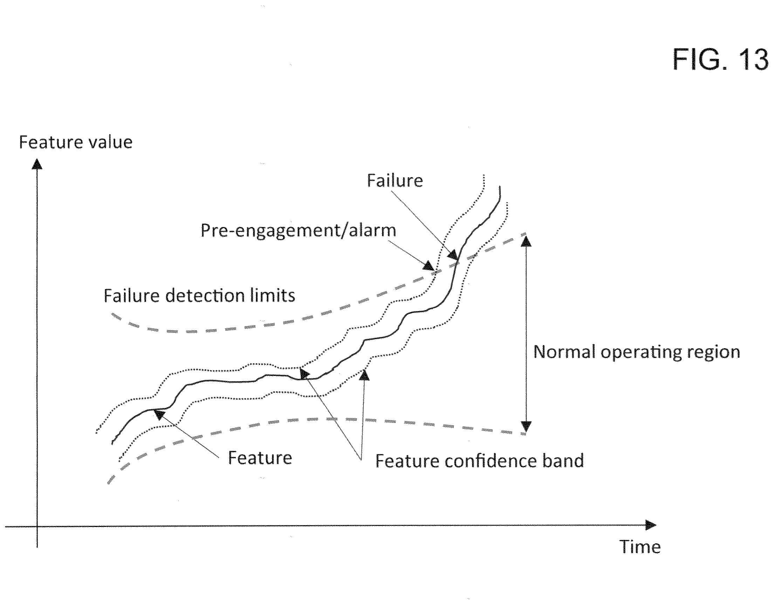

Furthermore, control unit 15 is, in one embodiment, programmed to implement more complex fault detection techniques, particularly data-driven methods, (i.e., neural networks) and/or model-based approaches. Model-based methods mathematically combine measured parameters into one or multiple features according to physical models of thermal engine 11 detecting failures when feature(s) deviate from normal operating regions (Figure 13).

Still more precisely, -Figure 13 shows the possible evolution of a generic feature of the physical model of thermal engine 11. The nominal value ranges within a confidence band associated to measurement uncertainties. When either confidence band limit exceeds the normal operating region, control unit 15 is programmed to set emergency system 40 into idle mode, if not already in this condition, and to provide the crew with an alarm. Accordingly, electric motor 41 provides rotor 3 with torque after than the nominal feature value crosses the failure detection limits, or rather failure is detected.

Such features could include, but are not limited to, the ratio between power PT/S and power PMGB available at gearbox 25, an increase of which could, for example, indicate a bearing failure.

In particular, control unit 15 is programmed to keep electric motor 41 idle during a take-off or landing manoeuvre and to disconnect electric motor 41 from thermal engine 11 during cruise flight.

When electric motor 41 is kept idle, it provides substantially null torque value τ_{EL} and is driven at a rotational speed ω_{EL} equal to a rotational speed at an input of main gearbox 25.

In a known way, in the normal operating condition of thermal engine 11, helicopter 1 has a single engine operative envelope 14, i.e., a of proper values of the helicopter 1 (e.g., set of values of speed V, angular velocity of rotor 3, load factor) and external conditions (e.g., distance from obstacles, ground conditions) wherein helicopter 1 can fly in safety even in case of a thermal engine 11 failure and without the intervention of the emergency system 40.

In a similar way, in the normal operating condition of thermal engine 11 and emergency system 40, helicopter 1 has a multi engine operative envelope, i.e., a of proper values of the helicopter 1 (e.g., set of values of speed V, angular velocity of rotor 3, load factor) and external conditions (e.g., distance from obstacles, ground conditions) wherein helicopter 1 can fly in safety even in case of a thermal engine 11 failure with and only with the intervention of the emergency system 40.

Helicopter 1 further comprises:
- a human-machine interface 50;
- a plurality of sensors 51 adapted to sense external environment parameters, e.g. pressure altitude PALT, outside air temperature OAT and to provide control unit 15 with respective input signals;
- a plurality of sensors 52 adapted to sense a state of charge SoC of source 42 and a state of health SoH of the emergency system 40, and to provide control unit 15 with respective input signals;
- a sensor 53 adapted to detect current rotational speed ω of rotor 3;
- a sensor 45 adapted to detect a temperature ITT of thermal engine 11;
- a sensor 46 adapted to sense torque τ_{T/S} provided by thermal engine 11;
- a sensor 47 adapted to sense a torque τ_{MGB} available at the gearbox 25; and
- a sensor 48 adapted to sense power P_{MGB} available at the gearbox 25.

In particular, FADEC 13 provides at least a signal associated to current rotational speed ω of thermal engine 11.

Furthermore, helicopter 1 comprises (see Figure 1):
- a controller 54 adapted to adjust a torque τ_{ES} provided by electric motor 41;
- a controller 55 adapted to adjust a torque τ_{T/S} provided by thermal engine 11; and
- a pair of summing devices 56, 57, each of which receives in input a signal associated to current rotational speed ω from sensor 53 and a signal associated to set value of rotational speed ω_{SET} from avionic unit 20, and to provide in output respectively speed controller 54 and controller 55 with a rotational speed error value ω_{ERR} equal to ω_{SET}-ω.

It is important to mention; that some of or all sensors 45, 46, 47, 48 might be virtual.

In the embodiment shown, controller 55 is integrated in FADEC 13 as well as controller 54 is integrated in power controller unit 43.

Still more precisely, speed controller 54 generates a control current i_{SET} for power controller unit 43, which corresponds to torque τ_{ES} generated by electric motor 54 on the basis of rotational speed error value ω_{ERR}.

Controller 55 controls thermal engine 11 so as to generate torque τ_{T/S} on the basis of rotational speed error value ω_{ERR}.

Human-interface 50 is adapted to allow the crew to insert some data, e.g. a take-off weight TOW of helicopter 1.

With reference to Figures 10 and 11, it is shown the time-variation of rotational speed ω, a torque τ_{LOAD} and a power P_{LOAD} required by rotor 3, in case of in-flight shut down of thermal engine 11 at and partial loss of power of thermal engine 11 at a FAILURE time.

Torque τ_{LOAD} corresponds to the torque required by the rotor 3 to sustain the helicopter 1 in a generic flight condition.

In the same way, power P_{LOAD} corresponds to the power required by the rotor 3 to sustain the helicopter 1 in a generic flight condition.

With reference to figures 10 and 11:
- at FAILURE time, thermal engine 11 shuts down or has a partial power loss;
- at time FAILURE DETECTION, control unit 15 detects the shut down/partial loss power of thermal engine 11;
- at ACTIVATION TIME time, control unit 15 actuates electric motor 41;
- at ES RAMP-UP END time, control unit 15 keeps at constant value torque τ_{ES} provided by electric motor 41; and
- at TRANSITORY END time, current value of rotational speed ω is again at set value ωSET.

With reference to the in-flight shut down of thermal engine 11 shown in Figure 10, controller 55 receives in input by control unit 15 a rotational speed threshold value ωTH for rotor 3, which is lower than rotational speed set value ωSET.

Speed controller 54 is adapted to adjust torque τ_{ES}, in such a way that current rotational speed ω equals rotational speed set value ω_{SET}, in case rotational speed ω is lower than rotational speed threshold value ω_{TH}.

The current value of rotational speed ω of rotor 3 equals required value ω_{SET} up to FAILURE time, progressively decreases and then progressively increases again to value ω_{SET} reached at TRANSITORY END time.

Still more precisely, at FAILURE DETECTON time, control unit 15 detects that either the absolute value of time derivative ϕ (ϕ_{ERR}) is higher than a threshold value ϕ_{TH} (ϕ_{ERRTH}) or current rotational speed ω (ω_{ERR}) is lower than a threshold value ω_{TH} (ω_{ERRTH}).

Furthermore, Power P_{T/S} provided by thermal engine 11 corresponds to power P_{LOAD} before FAILURE time and then decreases up to a null value; power P_{ES} provided by electric emergency system 40 is null up to ACTIVATION time, progressively increases up to higher values than P_{LOAD} reached at ES RAMP-UP END time, and then reaches and remains at P_{LOAD} at TRANSITORY END TIME.

Torque τ_{T/S} provided by thermal engine 11 is constant before FAILURE time, and progressively decreases up to a null value as of FAILURE time.

Torque τ_{ES} provided by electric emergency system 40 is null up to ACTIVATION RAMP-UP time, progressively increases up to a value greater than τ_{LOAD} reached at EMERGENCY SYSTEM 40 RAMP-UP END time, and then decreases up to value τ_{LOAD} reached at TRANSITORY END time.

With reference to partial loss of power of thermal engine shown in Figure 11, controller 55 receives in input by control unit 15 a rotational speed error ω_{ERR} corresponding to the difference between rotational speed set value ω_{SET} and current rotational speed value ω.

Speed controller 54 and controller 55 are adapted to adjust respectively torque τ_{ES} and torque τ_{T/S}, in order to minimize rotational speed error ω_{ERR} between required value ω_{SET} and current value of rotational speed ω.

In particular, the current value of rotational speed ω of rotor 3 equals required value ω_{SET} up to FAILURE time, progressively decreases to a value greater than ω_{TH} and then increases back to required value ω_{SET}.

Still more precisely, current value of rotational speed ω of rotor 3 decreases up to a value higher than threshold value ω_{TH} reached at FAILURE DETECTION time.

At FAILURE DETECTION time, control unit 15 detects the partial failure of thermal engine, on the basis of previously indicated parameters ω, ω_{ERR}, ϕ, ϕ_{ERR}, IIT, τ_{T/S}, τ_{MGB}, Pτ_{/s} P_{MGB} or few of them ω, ω_{ERR}, ϕ, ϕ_{ERR}.

Furthermore, power P_{T/S} provided by thermal engine 11 corresponds to power P_{LOAD} before FAILURE time and then decreases up to a minimum value P_{T/S END}; power P_{ES} provided by electric emergency system 40 is null up to ACTIVATION time, progressively increases up to a maximum value lower than P_{LOAD} reached at ES RAMP-UP END time, and then from TRANSITORY END time remains a value P_{ES END}, which equals P_{LOAD}-P_{T/S END}.

Torque τ_{T/S} provided by thermal engine 11 is constant before FAILURE time, and progressively decreases up to a constant value τ_{T/S END} greater than zero as of FAILURE time.

Torque τ_{ES} provided by electric emergency system 40 is null up to ACTIVATION RAMP-UP time, progressively increases up to a value lower than τ_{LOAD} reached at EMERGENCY SYSTEM 40 RAMP-UP END time, and then decreases up to a constant value τ_{ES END}, which equals τ_{LOAD}-τ_{T/S END}.

It is important to note that the actual time variation of current rotational speed ω, torque τ_{LOAD} and power P_{LOAD} required by rotor 3, torque τ_{T/S}, torque τ_{ES}, power P_{T/S} and power P_{ES} can be different from the ones shown in Figures 10 and 11.

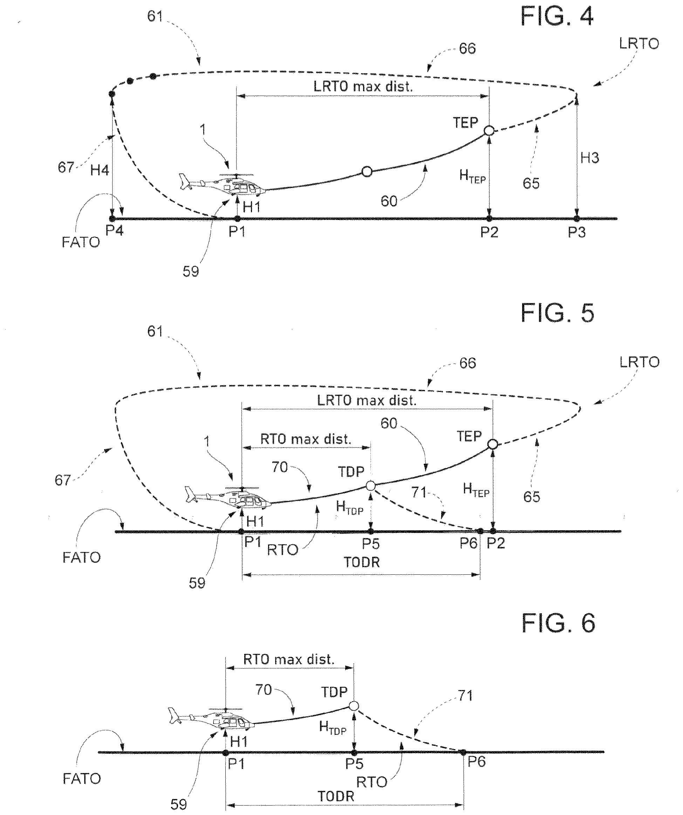

Furthermore, the capability of fulfilling the following manoeuvres in case of failure of thermal engine 11 by means of emergency system 40 is hereinafter referred to as performance class PC xx:
- to safely land on final approach and take off area FATO after an aborted take-off or during a landing, by means either of a Long-Rejected Take-Off manoeuvre LRTO or a Rejected Take-Off manoeuvre RTO (Figures 4 to 6); and
- to perform a vertical landing at calculated distance from the failure depending by the allowable energy in the power storage 42.

Control unit 15 is further programmed to arm emergency system 40 in case pilot acts on an arm command 81 of human-machine interface 50.

When emergency system 40 is armed by the pilot, control unit 15 is programmed to activate emergency system 40 when at least a partial failure of thermal engine 11 is automatically detected.

When emergency system 40 is armed by the pilot, control unit 15 is programmed to activate emergency system 40 in case pilot acts on a manual activation command 80 of human-machine interface 50.

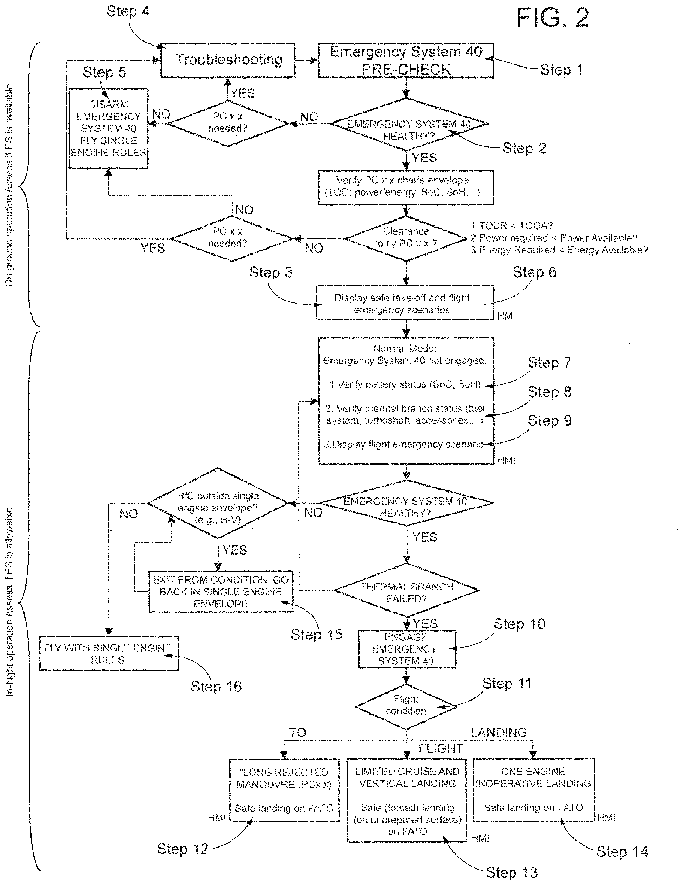

Control unit 15 is programmed to carry out the following operations, when helicopter 1 is on ground and previous to the flight of helicopter 1 (Figure 2):
- step 1) pre-checking if the status of emergency system 40 is operative or in failure;
- step 2) in case the status of emergency system 40 is operative, checking if helicopter 1 is capable of flying in PC xx class;
- step 3) in case helicopter 1 is capable of carrying out PC xx, displaying on human-machine interface 50 indications 94, 96 relative to LRTO emergency manoeuvre and/or indications 95, 99 relative to RTO emergency manoeuvre.

In greater detail, control unit 15 is programmed to cause during step 1) the flow of an electrical current through emergency system 40 and to sense a plurality of parameters, e.g. the voltage, torque and speed of emergency system 40, to verify its status if is operative or in failure.

Control unit 15 is further programmed to carry out the following additional operations, when helicopter 1 is on ground and previous to the flight of helicopter 1 and in case the status of emergency system 40 is in the failure condition:
- step 4) if helicopter 1 is required to be capable of flying in PC xx class or the failure affect the safety of flight in the single engine operative envelope 14, to troubleshoot the failure; and
- step 5) if helicopter 1 is not required to be capable of flying in PC xx class and the failure does not affect the safety of flight in the single engine operative envelope 14, to disarm emergency system 40 and to fly helicopter 1 in single engine operative envelope 14.

Optionally, control unit 15 is programmed to assist the pilot, e.g., to move back helicopter 1 inside single engine operative envelope 14 (step 15).

The points of the LRTO and RTO emergency manoeuvre will be hereinafter defined by means of a horizontal position measured on final approach and take off area FATO, and a vertical height measured with respect to FATO.

As shown in Figures 4 to 6, emergency manoeuvre LRTO substantially comprises:
- a stretch 59 carried out in hovering condition at a position P1 on FATO and from a null height to a height H1;
- a stretch 60, along which helicopter 1 increases its height and extending from position P1 on FATO and height H1 to a position P2 and height H_{TEP} greater than height H1; and
- a stretch 61, which extends from position P2 and height H_{TEP} to position P1 and null height.

In particular, stretch 61 comprises, in turn:
- a portion 65 along which helicopter 1 increases its height and extending from position P2 and height H_{TEP} to position P3 on FATO and height H3 greater than height H_{TEP};
- a portion 66 partially superimposed to stretch 60, along which helicopter 1 repositions above the FATO, and extending from position P3 and height H3 to a position P4 on FATO and height H4; and
- a portion 67, along which helicopter 1 decreases its height from position P4 and height H4 to position P1 and null height.

In particular, positions P1, P2 are interposed between position P3, P4 along a projection of the trajectory of helicopter 1 on FATO.

In detail, "repositioning" indicates in the context of the present description a translation in horizontal or translation in horizontal and vertical position.

The distance measured on the ground plane containing FATO between position P1 and position P2 is hereinafter referred to as LRTO max dist.

The point at position P2 and height H_{TEP} is hereinafter referred to as take-off end point TEP.

Take off end point TEP is the point, after which helicopter 1 is too far from final approach and take off area FATO, and therefore can no longer return to FATO by means of LTRO emergency manoeuvre.

It is also possible to define, a rejected take-off manoeuvre RTO comprising (Figures 5 and 6):
- stretch 59;
- a stretch 70 along which helicopter 1 increases its height and extending from position P1 on area FATO and height H1 to position P5 and height H_{TDP} greater than height H1 and lower than height H2; and
- a stretch 71, along which helicopter 1 decreases its height and extending from position P5 on FATO and height H_{TDP} to position P6 and null height.

In particular, position P5 is interposed between positions P1, P6 along a projection of the trajectory of helicopter 1 on FATO.

The point at position P5 and height H_{TDP} is hereinafter referred to as take-off decision point TDP. In case of failure of thermal engine 11 before take-off decision point TDP, helicopter 1 is required to carry out a RTO manoeuvre. In case of failure of thermal engine 11 after take-off decision point TDP, helicopter 1 is required to carry out a LRTO manoeuvre.

The distance between positions P1, P6 on FATO is hereinafter referred to as Take off Distance Required TODR and corresponds to the distance travelled by helicopter 1 in case of RTO manoeuvre in the worst case, i.e. in case of failure of thermal engine 11 at take-off decision point TDP.

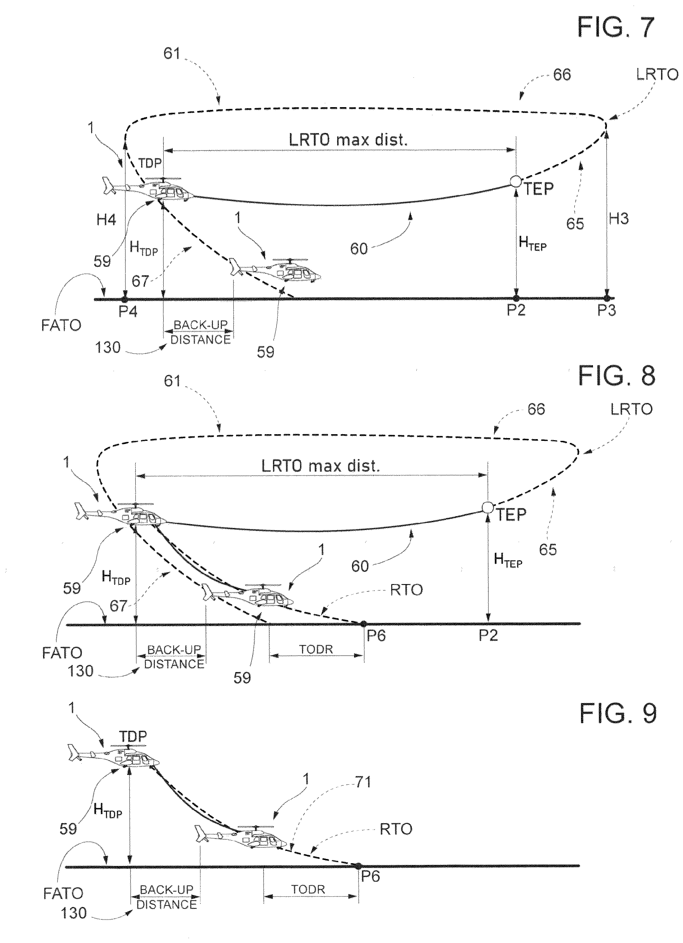

With reference to Figures 7 to 9, in case FATO is confined, e.g. by an obstacle or by other restrictions, take-off distance required TODR is reduced for a length BACK-UP DISTANCE.

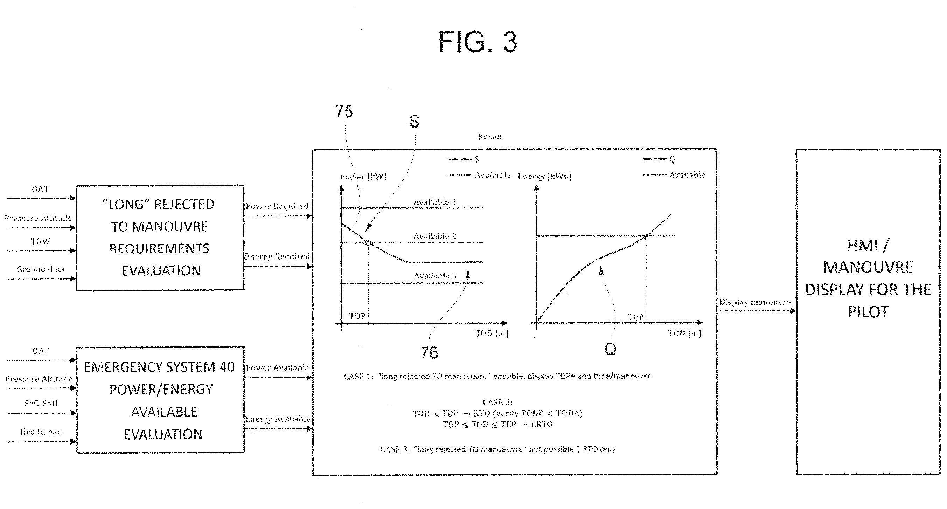

With reference to Figure 3, control unit 15 is programmed to (step 3):
- elaborate a value of required Power and required Energy by LTRO manoeuvre, on the basis of pressure altitude PALT, outside air temperature OAT, take-off weight TOW and ground data; and
- elaborate a value of Power available and Energy available for emergency system 40, on the basis of the state of health SoH, state of charge SoC, pressure altitude PALT, outside air temperature OAT and health parameters.

In particular, ground data are, among the others ground conditions which refer to the features of FATO - e.g. clear area, short area, elevated heliport, confined area -, the presence of potential obstacles as well as the wind speed and direction.

Health parameters are the operative condition of emergency system 40, in particular the status of electric motor 41, electric energy storage 42 and power electronic 43.

Preferably, ground data are inserted by the crew or detected by dedicated sensors.

Health parameters are detected by power electronic unit 43 and electric energy storage 42 and provided to control unit 15.

As shown in Figure 3 by the way of a non-limitative example, a path S of required Power with respect to take-off distance TOD comprises:
- a decreasing stretch 75; and
- a constant stretch 76.

In particular, stretch 75 is associated also to value of take-off distance TOD corresponding to take off decision point TDP.

A path Q of required Energy with respect is increasing respect to take-off distance TOD.

Emergency system 40 available power and available energy are substantially constant with respect to take-off distance TOD.

The value of take-off distance TOD for which required energy equals available energy is take-off end point TEP.

The value of take-off distance TOD for which required power equals available power is take-off decision end point TDP.

Control unit 15 is programmed to alternatively (step 3) :
- display on human-machine interface 50 indication 94, 96 associated to LTRO manoeuvre, in case Power required is lower than Power available for any value of take-off distance TOD; or
- display on human-machine interface 50 an indication 95, 99 associated to RTO manoeuvre, in case Power required is greater than Power available for any value of take-off distance TOD.

Control unit 15 is further programmed to simultaneously display on human-machine interface 50 indication 94, 96 associated to LRTO manoeuvre and indication 95, 99 associated to RTO manoeuvre, in case Power required is greater than Power available only for values of take-off distance TOD smaller than take-off decision point TDP and take-off distance available TODA on FATO is greater than take-off distance required TODR.

It is important to note that performance class PC xx is defined by the capability of helicopter 1 to carry out emergency manoeuvre LRTO in case of failure of thermal engine 11 by means of emergency system 40 only at least for some values of take-off distance TOD.

Control unit 15 is also programmed to carry out the following operations, during the flight of helicopter 1 and starting from a condition in which emergency system 40 is armed and disengaged (Figure 2):
- step 7) verify the status of health SoH and status of charge SoC of source 42 and health parameters of the emergency system 40;
- step 8) verify the status of thermal engine 11; and
- step 9) display on human-machine interface 50 a visual representation 93 of the area reachable by helicopter 1, in case helicopter 1 is in flight condition, a portion 67 of indication 94 associated to the landing trajectory in case helicopter 1 is in landing condition, indications 94, 96 in case helicopter 1 is in take-off condition.

Control unit 15 is also programmed, in case electrical emergency system 40 is not in operative condition to verify if helicopter 1 is outside single engine operative envelope 14 with only thermal engine 11 operatively connected to rotor 3 (step 15).

Control unit 15 is further programmed, in case electrical emergency system 40 is in operative condition and thermal engine 11 is shut down or has a partial power loss, to activate the emergency system 40 providing torque to rotor 3 through electric motor 41 (step 10), with the previously identified steps shown in Figures 10 and 11.

Control unit 15 is further programmed to detect (step 11) the flight condition, i.e. if helicopter 1 is carrying out a take-off manoeuvre, is in flight condition, or is carrying out a landing manoeuvre.

In case helicopter 1 is carrying out a take-off manoeuvre between positions P1 and P3, control unit 15 is programmed to display on human-machine interface 50 indications 94, 96 associated to LTRO manoeuvre and 95, 99 associated to RTO manoeuvre (step 12).

In case helicopter 1 is in flight condition, control unit 15 is programmed to display a visual representation 93 of the area reachable by helicopter 1 (step 13).

In case helicopter 1 is in landing condition, control unit 15 is programmed to display on human-machine interface 50, only stretch 67 of indications 94, 96 associated to the descending landing trajectory of helicopter 1 (step 14).

Control unit 15 is also programmed, in case electrical emergency system 40 is not in operative condition and the failure does not affect the safety of flight in the single engine operative envelope 14, to verify if helicopter 1 is outside single engine operative envelope 14 with only thermal engine 11 operatively connected to rotor 3 (step 15).

In case helicopter 1 is outside single engine operative envelope 14 with only thermal engine 11 operatively connected to rotor 3, control unit 15 is programmed to facilitate the pilot to move back helicopter 1 inside single engine operative envelope 14 and disarm the emergency system 40.

Control unit 15 is also programmed, in case electrical emergency system 40 is not in operative condition and the failure affect the safety of flight in the single engine operative envelope 14, to facilitate the pilot to land as soon as possible.

Control unit 15 can be further configured to manage the power in order to optimize consumption (i.e., fuel and battery energy).

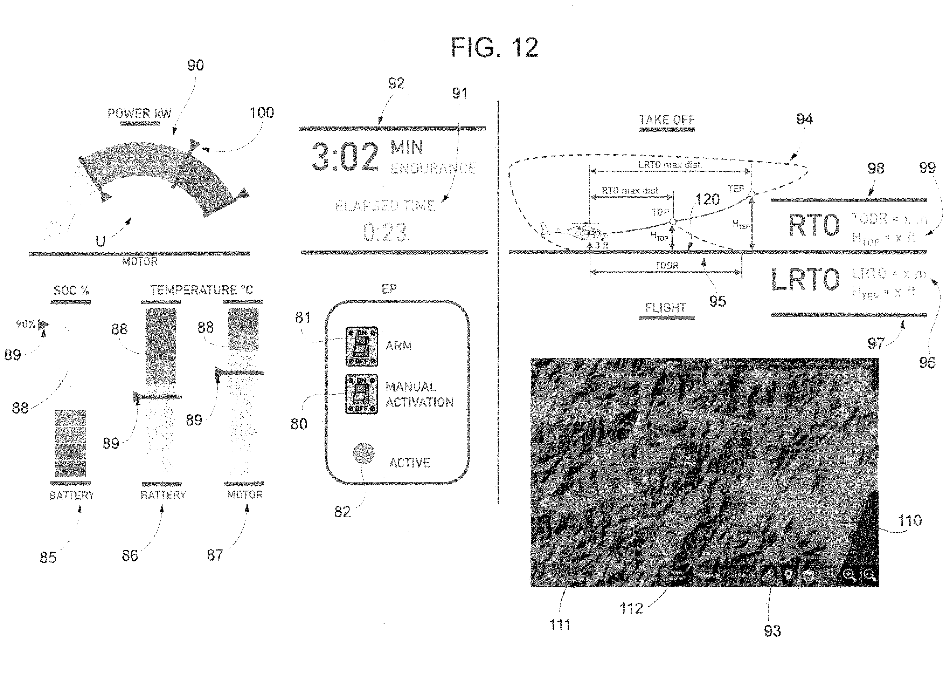

With reference to Figure 12, human-machine interface 50 advantageously comprises:
- a manual command 80, which can be manually operated to activate emergency system 40 and so connect electric motor 41 to rotor 3 without disconnecting thermal engine 11 from rotor 3;
- an ARM command 81, which is operable to arm emergency system 40;
- an indication 82 associated to the fact that emergency system 40 is active.

Human-machine interface 50 further comprises:
- an indication 85 associated to state of charge SoC of source 42;
- an indication 86 associated to the temperature of source 42; and
- an indication 87 associated to the temperature of electric motor 41.

In particular, indications 85, 86, 87 comprises, each, a graduate scale 88 and a cursor 89.

Still more precisely, graduate scale 88 of indication 85 is coloured in red for small percentage value of state of charge SoC of source 42, in yellow for intermediate percentage value of state of charge SoC of source 42 and in green for high percentage value of state of charge SoC of source 42.

Graduate scale 88 of indication 86 (87) is coloured in green for small values of temperature of source 42 (electric motor 41), yellow for intermediate values of temperature of source 42 (electric motor 41) and red for high values of temperature of source 42 (electric motor 41).

Graduate scale 88 is linear, in the embodiment shown. Human-machine interface 50 further comprises:
- an indication 90 of the power required to electrical motor 41;
- an indication 91 of the time lapsed as to when emergency system 40 has been activated; and
- an indication 92 of the remaining time in which emergency system 40 can drive rotor 3.

In the embodiment shown, indication 90 comprises, in turn, a graduate scale 100 and a cursor 101 movable with respect graduate scale 100.

Still more precisely, graduate scale 100 of indication 90 is coloured in yellow for small values of required power, in orange for intermediate values of required power, and in red for high values of required power.

Indications 91, 92 are alpha-numerical.

Human-machine interface 50 further comprises:
- visual representation 93 of the area reachable by helicopter 1 in case of failure of thermal engine 11 and driving rotor 3 with emergency electrical system 40 only, as a function of some input parameters, e.g. altitude and position of helicopter 1 and status of emergency electrical system 40;
- indication 94 associated to long rejected take off manoeuvre LTRO;
- indication 95 associated to rejected take-off manoeuvre RTO;
- indication 96 associated to LRTO max distance and an indication 97 associated to height H_{TEP} at position P1;
- indication 98 associated to take off Distance Required TODR and an indication 99 associated to height H_{TDP} at take-off decision point TDP; and
- a line 120 associated to take-off area FATO.

Indications 94, 96 are shown by control unit 15 on human-machine interface 50 in case helicopter 1 is capable to carry out long rejected take off manoeuvre LRTO.

Indication 94 mirrors the trajectory of LTRO manoeuvre and indication 95 mirrors the trajectory of RTO manoeuvre.

For the sake of conciseness, stretches and relevant points of indications 94, 96 are referred to with the same reference numbers of the stretches and the relevant points of corresponding LTRO manoeuvre and RTO manoeuvre.

Indications 94, 95 have stretch 59 and area FATO in common.

Indication 94 further comprises stretches 60, 61, take-off end point TEP and height H_{TEP}.

Indication 95 further comprises stretches 70, 71 and height H_{TDP}, take off decision point TDP and take-off distance required TODR.

In case FATO is confined (Figures 7 to 9), e.g. by an obstacle or by other restrictions, human-machine interface 50 further comprises an indication 130 associated to an amount of FATO unavailable for take-off operation. In such case, the amount of FATO unavailable for take-off operation results in a reduction of take-off distance required TODR.

Control unit 15 is in particular, programmed to display indication 130 on human-machine interface 50 on the basis of ground data inserted by crew on human-interface 50 or automatically detected by dedicated additional sensors of helicopter 1.

Visual indication 93 comprises, in the embodiment shown:
- a map 110 of the terrain, preferably a map showing the elevation of terrain;
- an arrow 111 superimposed to map 110 and associated to the position of helicopter 1; and
- a closed boundary 112 superimposed to map 110 and surrounding arrow 111 and associated to the circumference of the area that can be reached by helicopter 1 in case of failure of thermal engine 11 and by means of emergency system 40 only.

Indication 96, 97, 98, 99 are alpha-numerical.

The operation of helicopter 1 is hereinafter described, as of a condition in which helicopter 1 is on-ground, thermal engine 11 is connected to rotor 3, and the crew has armed emergency system 40 by means of ARM command 80.

In this condition, due to the fact that take-off manoeuvre is to be carried out, electric motor 41 is kept idle. Still more precisely, electric motor 41 provides substantially null torque value τ_{EL} and is driven at a rotational speed ω_{EL} equal to a rotational speed at an input of main gearbox 25.

Furthermore, sensors 51 detect external environment parameters, e.g. pressure altitude PALT, outside air temperature OAT, sensors 52 detect state of charge SoC of source 42 and state of health SoH of source 42.

Furthermore, sensor 53 detects current rotational speed ω of rotor 3, sensor 45 detects temperature ITT of thermal engine 11, sensor 46 detects torque τ_{T/S} provided by thermal engine 11, sensor 47 detects torque τ_{MGB} provided by gearbox 25, and sensor 48 detects power P_{MGB} provided by gearbox 25.

Avionic unit 20 provides control unit 15 with set value of rotational speed ω_{SET}.

Control unit 15 elaborates rotational error ω_{ERR} between current rotational speed ω and set value of rotational speed ω_{SET}, and its time derivative ϕ_{ERR}.

Control unit 15 controls controller 55 in such a way that torque τ_{T/S} and power P_{T/S} provided by thermal engine 11 equals torque τ_{LOAD} and power P_{LOAD} required by rotor 3.

Torque τ_{ES} is null, being emergency system 40 deactivated.

In this condition, the crew to insert some data, e.g. a take-off weight TOW of helicopter 1, and control unit 15 preliminary checks the status of emergency system 40 (step 1) .

Control unit 15 also displays on human-machine interface 50 indication 85 associated to state of charge SoC of source 42, indication 86 associated to state of health SoH of source 82 and indication 87 associated to temperature of electric motor 41.

In case control unit 15 detects that emergency system 40 is in operative condition, control unit 15 verifies (step 2) if helicopter 1 is capable of carrying out LTRO manoeuvre at least for some values of take-off distance TOD and, therefore flying in performance class PC XX, on the basis a plurality of parameters including State of Charge SoC, state of Health SoH of electrical source 42, Power and Energy available from electrical source 42 and data inserted by crew on human-machine interface 50, e.g. Take off weight TOW.

In particular, control unit 15 elaborates a value of required Power and required Energy by LTRO manoeuvre, on the basis of pressure altitude PALT, outside air temperature OAT, take-off weight TOW and ground data; and elaborates a value of Power available and Energy available for emergency system 40, on the basis of the state of health SoH, state of charge SoC, pressure altitude PALT, outside air temperature OAT and health parameter.

Control unit 15 alternatively displays on human-machine interface 50 (step 3):
- indications 94, 96 associated to LTRO manoeuvre, in case Power required is lower than Power available for any value of take-off distance TOD; or
- indications 95, 99 associated to RTO manoeuvre, in case Power required is greater than Power available for any value of take-off distance TOD.

Control unit 15 simultaneously displays on human-machine interface 50:
- indication 94, 96 associated to LRTO manoeuvre and indication 95, 99 associated to RTO manoeuvre, in case Power required is greater than Power available only for values of take-off distance TOD smaller than take-off decision point TDP and take-off distance available TODA on FATO is greater than take-off distance required TODR.

In case it verifies that helicopter 1 is capable of carrying out LTRO manoeuvre, control unit 15 displays (step 3) on human-machine interface 50:
- indication 94 associated to manoeuvre LRTO;
- indication 96 associated to LRTO Max distance; and
- indication 98 associated to take off distance required TODR and indication 99 associated to height H_{TDP}.

In case it verifies that flight in performance class PC xx is not feasible, control unit 15 displays on human-machine interface 50 indications 95, 99 associated to RTO manoeuvre and indication 98 associated to take off distance required TODR.

In case it detects the status of emergency system 40 is in failure, and the failure does not affect the safety of flight in the single engine operative envelope 14, control unit 15 warns the pilot to verify if flight in performance class PC xx is required.

If flight in performance class PC xx is not required, the crew disarms (step 5) emergency system 40 and control unit 15 warns the pilot to fly helicopter 1 in single engine operative envelope 14 and with only thermal engine 11 connected to rotor 3.

If flight in performance class PC xx is required, or the failure of emergency system 40 affects the safety of flight in the single engine operative envelope 14, control unit 15 facilitates the crew to troubleshoot the problem (step 4).

In particular, system 15 is programmed to identify and isolate anomalies, providing a diagnosis of the problem and suggesting corrective actions to the crew. These actions aim to resolve the issue by eliminating the anomaly, where possible, e.g., performing extraordinary maintenance on a specific part or component, excluding a system not listed in the master minimum equipment list, etc.

The operation of helicopter 1 is hereinafter described, as of condition in which helicopter 1 is in-flight and emergency system 40 is not armed. In this condition, electric motor 41 is disconnected from rotor 3.

Control unit 15 verifies status of charge SoC of source 42 and the status of thermal engine 11, and displays on human-machine interface 50 visual representation 93 of the area reachable by helicopter 1, a portion 67 of indication 94 associated to the landing manoeuvre in case helicopter 1 is in landing condition, indications 94, 95 in case helicopter 1 is in take-off condition (steps 7 to 9).

Control unit 15 verifies again if emergency system 40 is in operative condition or not.

In case control unit 15 detects that emergency system 40 is not in operative condition and the failure affect the safety of flight in the single engine operative envelope 14, control unit 15 facilitates the pilot to land as soon as possible.

In case control unit 15 detects that emergency system 40 is not in operative condition and the failure does not affect the safety of flight in the single engine operative envelope 14, control unit 15 verifies if helicopter 1 is outside single engine operative envelope 14 with thermal engine 11 only connected to rotor 3.

In case helicopter 1 is outside single engine operative envelope 14 with only thermal engine 11 providing power to rotor 3, control unit 15 is programmed to facilitate the pilot to move back helicopter 1 inside single engine operative envelope 14 (step 15) and disarm the emergency system 40.

In case helicopter 1 is inside single engine operative envelope 14, it would be required to disarm the emergency system 40 and the pilot is required to continue control helicopter 1 inside single engine operative 14 (step 16).

In case it detects emergency system 40 is in operative condition, control unit 15 checks if thermal engine 11 is in operative condition.

With special reference to Figure 10, control unit 15 detects the in-flight shut down of thermal engine 11 at FAILURE DETECTION time, when either the absolute value of time derivative ϕ (ϕ_{ERR}) is higher than a threshold value ϕ_{TH} (ϕ_{ERRTH}) or in case of current rotational speed ω (ω_{ERR}) is lower than a threshold value ω_{TH} (ω_{ERRTH}) (Figure 10) .

FAILURE DETECTION time is later than FAILURE time at which thermal engine 11 shuts down.

Furthermore, control unit 15 activates electric motor 41 at FAILURE DETECTION time and up to ACTIVATION time. Still more precisely, control unit 15 controls speed controller 54, in such a way that torque τ_{ES} and power P_{ES} provided by electric motor 41 increases from a null value respectively to a higher value than τ_{LOAD} and power P_{LOAD} required by rotor 3 as of ACTIVATION time and up to EMERGENCY SYSTEM 40 RAMP-UP END time.

In the meanwhile, torque τ_{T/S} and power P_{T/S} provided by THERMAL engine 11 are null at EMERGENCY SYSTEM 40 RAMP-UP END time.

As a consequence, as of RAMP-UP END time, the whole τ_{LOAD} and power P_{LOAD} required by rotor 3 is provided by electric motor 41.

Furthermore, at TRANSITORY END time, the activation of electric motor 41 has brought current value of rotational speed ω of rotor 3 again at set value ω_{SET}.

With special reference to Figures 11 thermal engine 11 partially loses power at FAILURE time.

Control unit 15 detects partial power loss of thermal engine 11 at FAILURE DETECTION time, on the basis of temporal variation of the current values of difference ω_{ERR}, temperature IIT, torque τ_{T/S}, torque τ_{MGB} and power P_{MGB} (Figure 11) .

In particular, control unit 15 identifies the partial loss of power of thermal engine 11 on the basis of the following, non limiting examples combination of the above-identified parameters:
- ϕ_{ERR} not strictly positive and torque τ_{T/S} (power P_{T/S}) of thermal engine 11 lower than a maximum value τ_{T/SMAX} (P_{T/SMAX}) function of outside pressure PALT, and outside temperature OAT, for an overall time ΔT greater than a predefined time ΔT_{TH} function of temperature IIT; and
- ω_{ERR} greater than a threshold value ω_{ERRTH} and torque τ_{T/S} (power P_{T/S}) of thermal engine 11 lower than maximum value τ_{T/SMAX} (P_{T/SMAX}) function of outside pressure PALT, and outside temperature OAT, for overall time ΔT greater than a predefined time ΔT_{TH} function of temperature IIT.

In one embodiment, control unit 15 implements more complex fault detection techniques, particularly data-driven methods, (i.e., neural networks) and/or model-based approaches. Model-based methods mathematically combine measured parameters into one or multiple features according to physical models of thermal engine 11 and detects failures when feature(s) deviate from normal operating regions (Figure 13).

Still more precisely and with reference to Figure 13, control unit 15 controls electric motor 41 in such a way it provides rotor 3 with torque τ_{ES} in case nominal feature value crosses the failure detection limits, or rather failure is detected. Such features could include, but are not limited to, the ratio between power P_{T/S} and power P_{MGB} available at gearbox 25, an increase of which could, for example, indicate the bearing failure.

Furthermore, control unit 15 activates electric motor 41 at FAILURE DETECTION time and up to ACTIVATION time.

Still more precisely, control unit 15 controls speed controller 54, in such a way that torque τ_{ES} and power P_{ES} provided by electric motor 41 increases from a null value to respective constant values lower than τ_{LOAD} and P_{LOAD} as of ACTIVATION time and up to EMERGENCY SYSTEM 40 RAMP-UP END time.

In the meanwhile, torque τ_{T/S} and power P_{T/S} provided by thermal engine 11 decreases from respective constant values τ_{LOAD} and P_{LOAD} up to a constant value τ_{T/S END} and P_{T/S END} as of ACTIVATION time and up to EMERGENCY SYSTEM 40 RAMP-UP END time.

As of TRANSITORY END time, torque τ_{LOAD} (power P_{LOAD}) required by rotor 3 equals the sum of values of torques τ_{T/S END} and τ_{ES END} (powers P_{T/S END} and P_{ES END}) provided respectively by electric motor 41 and thermal engine 11.

Furthermore, as of TRANSITORY END time, the activation of electric motor 41 has brought current value of rotational speed ω of rotor 3 again at set value ω_{SET}.

As of ACTIVATION time, control unit 15 displays indication 82 associated to the fact that emergency system 40 is active, indication 90 associated to the power required by electrical motor 41, indication 91 associated to time lapsed as to when emergency system 40 has been activated, and indication 92 associated to the remaining time for which emergency system 40 can drive rotor 3.

Control unit 15 finally detects if helicopter 1 is carrying out a take-off manoeuvre, is in flight condition or is in landing manoeuvre (step 11).

In case helicopter 1 is in flight condition control unit 15 displays (step 13) on human-machine interface 50, visual representation 93 associated to the area which can be reached by helicopter 1 with emergency electrical system 40 activated.

In case helicopter 1 is carrying out a take-off manoeuvre between positions P1 and P3, control unit 15 displays on human-machine interface 50, indications 94, 95 associated to LTRO and RTO (step 12).

In case helicopter 1 is carrying out a landing manoeuvre, control unit 15 displays on human-machine interface 50 only stretch 67 of indication 94 associated to descending trajectory of helicopter 1 (step 13).

From an analysis of the features of the method of controlling helicopter 1, human-machine interface 50 and helicopter 1 according to the present invention, the advantages it allows to obtain are apparent.

In greater detail, control unit 15 is programmed to detect if thermal engine 11 is in an at least partial failure condition and in case thermal engine 11 is in the least partial failure condition, and to accelerate electric motor 41 up to when current rotational speed ω of rotor 3 equals set value ω_{SET}, in case of said partial failure of thermal engine 11.

Still more precisely, control unit 15 is configured to sense parameters ω, ω_{ERR}, ϕ, ϕ_{ERR}, IIT, τ_{T/S}, τ_{MGB}, Pτ_{/s} P_{MGB} of thermal engine 11 and rotor 3; and to identify at least partial failure of thermal engine, on the basis of previously indicated ω, ω_{ERR}, ϕ, ϕ_{ERR}, IIT, τ_{T/S}, τ_{MGB}, Pτ_{/s} P_{MGB} or few of them ω, ω_{ERR}, ϕ, ϕ_{ERR}.

In this way, it is possible, on one hand, to increase the safety of helicopter 1 in each flight phase, in particular in the most demanding ones like take-off and landing, thanks to activation of electric motor 41 of emergency system 40. On the other hand, helicopter 1 preserves the advantages typical of single-engine helicopter 1, in terms of lower pollutant emissions and cost in comparison with twin engines helicopters.

Furthermore, emergency system 40 allows helicopter 1 to carry out a LRTO manoeuvre with a go-around and safe land back in area FATO, in case of failure of take-off.

Accordingly, the workload of crew is reduced, the safety of landing in case of thermal engine 11 failure, and the take-off distance required TODR is reduced allowing take off over reduced FATO areas.

Human-machine interface 50 comprises:
- a manual command 80, which can be manually operated to activate emergency system 40;
- an ARM command 81 to arm emergency system 40;
- indication 82 associated to the fact that emergency system 40 is active.

Accordingly, human-machine interface 50 allows the crew to manually activate emergency system 40 and promptly informs the crew that emergency system 40 is activated.

Furthermore, human-machine interface 50 promptly provides the crew with:
- indication 85 associated to state of charge SoC of source 42;
- indication 86 associated to the temperature of source 42; and
- indication 87 associated to the temperature of electric motor 41;
- indication 91 associated to time lapsed as of when emergency system 40 has been connected to rotor 3;
- indication 92 associated to the remaining time for which electric motor 41 can still drive said rotor 3;
- indication 93 associated to an area reachable by helicopter 1 in case of failure of thermal engine 11 and with only electrical motor 41 driving rotor 42;
- a line 120 associated to a take-off area FATO; and
- information 94 associated to emergency take-off manoeuvre LRTO to be carried out when thermal engine 11 is not operative and only electric motor 41 is operatively connected to said rotor 3; or information 95 associated to an emergency take-off manoeuvre RTO to be carried out when thermal engine 11 is not operative and only electric motor 41 is operatively connected to rotor 3.

Accordingly, human-machine interface 50 promptly provides in an easily detectable way the crew with all the information associated to the capability of helicopter 1 with emergency system 40 connected to rotor 3.

Finally, it is apparent that modifications and variants not departing from the scope of protection of the claims may be made to method of controlling helicopter 1, human-machine interface 50 and helicopter 1.

## Claims

1. A method of controlling a helicopter (1), said helicopter (1) comprising:
- at least one thermal engine (11);
- at least one rotor (3), which is operatively connectable to said thermal engine (11) to be driven, in use, at a set rotational speed (ω_{SET}); and
- an emergency system (40) comprising, in turn:
at least one electric motor (41), which is operatively connectable to said rotor (3);
an electrical power source (42), which is electrically connected to said electric motor (41);
said method comprising the steps of:
i) operatively connecting said thermal engine (11) to said rotor (3) and keeping said electric motor (41) disconnected by said rotor (3) or idle, in a normal operating condition of said thermal engine (11);
**characterized by** comprising the steps of:
ii) detecting if said thermal engine (11) is in at least one partial failure condition; and
iii) accelerating said electric motor (41) up to when said current rotational speed (ω) equals said set value (ω_{SET}), in case of said partial failure of said thermal engine (11) ;
said step iii) comprising the steps of:
iv) sensing a plurality of first parameters (ω, ω_{ERR}, ϕ, ϕ_{ERR}, IIT, τ_{T/S}, τ_{MGB}, P_{τ/S}, P_{MGB}) of said thermal engine (11) and said rotor (3); and
v) identifying an at least partial failure of said thermal engine (11), on the basis of at least one of said first parameters (ω, ω_{ERR}, ϕ, ϕ_{ERR}, IIT, τ_{τ/S}, τ_{MGB}, P_{τ/S}, P_{MGB}).

2. The method of claim 1, **characterized in that** said first parameters (ω, ω_{ERR}, ϕ, ϕ_{ERR}, IIT, τ, P_{/S}, P_{MGB}) comprise at least:
- a first rotational speed (ω) of said thermal engine (11) and said rotor (3);
- a difference (ω_{ERR}) between said current rotational speed (ω) and a set value (ω_{SET}), and its time derivative (ϕ_{ERR)};
- a temperature (IIT) of said thermal engine (11);
- a first torque (τ_{T/S}) provided, in use, by said thermal engine (11);
- a second torque (τ_{MGB}) available, in use, to a gearbox (25) operatively connecting said thermal engine (11) to said rotor (3);
- a first power (P_{T/S}) provided, in use, by said thermal engine (11); and
- a second power (P_{MGB}) available, in use, to said gearbox (25).

3. The method of claim 2, **characterized by** comprising the step vi) of identifying a shut-down of said thermal engine (11) in case the absolute value of said time derivative (ϕ_{ERR}) is higher than a first threshold value (ϕ_{ERRTH}) or in case said current rotational speed (ω) is lower than a second threshold value (ω_{TH}); and/or
**characterized by** comprising the step vii) of identifying a partial failure of said thermal engine (11), in case:
- said time derivative (ϕ_{ERR}) of said difference (ω_{ERR}) is not strictly positive, and said first torque (τ_{T/S}) or first power (P_{T/S}) of said thermal engine (11) is lower than a respective maximum value (τ_{T/S MAX}; P_{T/S MAX}) for an overall time (ΔT) greater than a predefined time (ΔT_{TH}) function of said temperature (IIT) of said thermal engine (11); said maximum value (τ_{T/S MAX}; P_{T/S MAX}) being function of outside pressure (PALT) and outside temperature (OAT); and
- said difference (ω_{ERR}) is greater than a threshold value (ω_{ERRTH}), and said first torque (τ_{T/S}) or first power (P_{T/S}) of said thermal engine (11) is lower than said respective maximum values (τ_{T/S MAX}; P_{T/S MAX}) for said overall time (ΔT).

4. The method of any one of the foregoing claims, **characterized in that** said step i) comprises the further steps of:
viii) verifying a first status (SoC, SoH) of said electrical power source (42); and
ix) verifying a second status of said thermal engine (11) .

5. The method of any one of the foregoing claims, **characterized by** comprising the steps of:
x) checking if said electric motor (41) and a power electronic (43) is in an operative or in failure condition before said step ii); said power electronic (43) electrically controlling said electric motor (41);
said step ii) being carried out only if said emergency system (40) is in proper operative condition after said step ix) ;
said method comprising the further steps of:
xi) checking if said helicopter (1) is outside a single engine operative envelope (14) of said helicopter (1) with only said thermal engine (11) connected to said rotor (3);
xii) if said helicopter (1) is outside said single engine operative envelope (14) with only said thermal engine (11) providing power to rotor (3), controlling said helicopter (1) in such a way that said helicopter (1) is flown in said single engine operative envelope (14); and
xiii) if said helicopter (1) in inside said single engine operative envelope (14) with only said thermal engine (11) providing power to rotor (3), continuing to fly said helicopter (1) with only said thermal engine (11) connected to said rotor (3);
said steps xi), xii) and xiii) being carried out only if said emergency system (40) is in failure condition after said step xi);
said steps xi), xii) and xiii) being carried out at step i).

6. The method of any one of the foregoing claims, **characterized by** comprising further steps of:
xiv) identifying a flight condition of said helicopter (1);
said method further comprising the steps of alternatively:
xv) in case said flight condition is a take-off, displaying on a human-machine interface (50), a first indication (94, 96) associated to a first emergency manoeuvre (LRTO) of said helicopter (1)and/or a second indication (95, 99) associated to a second emergency manoeuvre (RTO) of said helicopter (1); or
xvi) in case said flight condition is a cruise flight, displaying on said human-machine interface (50), a second indication (93) associated to an area reachable by said helicopter (1) in case of failure of said thermal engine (11) and with only electrical motor (41) driving said rotor (3); or
xvii) in case said flight condition is landing, displaying on said human-machine interface (50) only a stretch (67) of said first indication (94, 96) associated to a descending path of said helicopter (1).

7. The method of any one of the foregoing claims, **characterized in that** any one of steps i) to xvii) is carried during the flight of said helicopter (1).

8. The method of any one the foregoing claims, comprising the further steps of:
xviii) pre-checking if said emergency system (40) is in said operative condition or in failure condition;
xix) determining, in case said emergency system (40) is in said operative condition, on the basis of first parameters (SoC, SoH) associated to the operative condition of said electric storage (42) and second parameters (OAT, ALT) associated to the external environment conditions, if said helicopter (1) can carry out said emergency manoeuvre (LRTO) when said thermal engine (11) is in said in failure condition and only said electric motor (41) is operatively connected to said rotor (3).

9. The method of claim 8, **characterized in that** said step xix) comprises steps of:
xx) elaborating a first value of the power and energy required (Power required, Energy required) by said emergency manoeuvre by said first and second emergency manoeuvres (LRTO) and (RTO); and
xxi) elaborating a second value of the power and energy available (Power available, Energy available) for said electric motor (41), electric storage (42) and power electronic (43); and
xxii) determining that said helicopter (1) can carry out said emergency take-off manoeuvre (LRTO) when said thermal engine (11) is in said at least partial operative condition and only said electric motor (41) is operatively connected to said rotor (3), in case said second values (Power available, Energy available) are greater than said first values (Power required, Energy required).

10. The method of claim 9, **characterized in that** said emergency take-off manoeuvre (LRTO) comprises:
- a first stretch (60), along which said helicopter (1) increases its height over said take-off area (FATO) from a third value (H1) reached at a first position (P1) to a fourth value (H_{TEP}) reached at a second position (P2) along said second stretch (60);
- a second stretch (61) consecutive to said first stretch (60), and comprising, in turn:
a first portion (65) extending from said second position (P2) to a third position (P3); and
a second portion (66) extending from said third position (P3) to a fourth position (P4); and
a third portion (67) extending from said fourth position (P4) to said first position (P1) reached at null height on said take-off area (FATO).

11. The method of any one of claims 8 to 10, **characterized in that** any one of steps xviii) to xxii) is carried out on-ground and before steps i) to xvii).

12. The method of any one of the foregoing claims, **characterized in that** said step i) comprises, in turn, the steps of:
xxiii) keeping said electric motor (41) idle during a take-off manoeuvre; and
xxiv) keeping said electric motor (41) disconnected from said thermal engine during said cruise flight;
said step xxiii) comprising, in turn, the sub-steps of:
xxv) providing a substantially null third torque value (τ_{EL}) by means of said electric motor (41);
xxvi) driving said electric motor (41) at a second rotational speed (ω_{EL}) equal to a third rotational speed at an input of a main gearbox (MGB) interposed between said thermal engine (11) and electric motor (41) and said rotor (3) .

13. A human-machine interface (50) for a helicopter (1); said helicopter (1) comprising:
- at least one thermal engine (11);
- at least one rotor (3), which is operatively connectable to said thermal engine (11);
- an emergency system (40) comprising, in turn:
at least one electric motor (41), which is operatively connectable to said rotor (3); and
an electrical power source (42), which is electrically connected to said electric motor (41);
said thermal engine (11) being operatively connected to said rotor (3) and said electrical motor (41) being disconnected by said rotor (3) or idle, in a normal operating condition of said thermal engine;
**characterized by** comprising:
- a first manual command (80), which can be operated to manually activate said emergency system (40);
- a second command ARM (81) operable to arm said emergency system (40); and
- a first indication (82) associated to the fact that said emergency system (40) is active and so said electric motor (41) is connected to said rotor (3).

14. The human-machine interface of claim 13, **characterized by** comprising:
- a second indication (85) associated to a state of charge (SoC) of said electrical power source (42);
- a third indication (86) associated to a temperature of said electrical power source (42);
- a fourth indication (87) associated to a temperature of said electrical motor (41);
- a fifth indication (91) associated to time lapsed as of when said electric motor (41) has been connected to said rotor (3); and
- a sixth indication (92) associated to a remaining time for which said electric motor (41) can still drive said rotor (3).

15. The human-machine interface of any one of claims 13 or 14, **characterized by** comprising a visual seventh indication (93) associated to an area reachable by said helicopter (1) in case of at least partial failure of said thermal engine (11) and with said emergency system (40) active and, therefore, said electrical motor (41) operatively connected with said rotor (3);
said visual representation (93) comprising, in turn:
- a map (110) of the terrain;
- an eight indication (111) superimposed to said map (110) and associated to the position of said helicopter (1) with respect to said terrain; and
- a ninth indication (112) superimposed to said map (110) and associated to an area that can be reached by said helicopter (1), in case of failure of said thermal engine (11) and with only electrical motor (41) driving said rotor (3) .

16. The human-machine interface of any one of claims 13 to 15, **characterized by** comprising:
- a first line (120) associated to a take-off area (FATO);
- a tenth visual information (94) associated to a first emergency take-off manoeuvre (LRTO) to be carried out when said thermal engine (11) is in at least partial failure condition and only said electric motor (41) is operatively connected to said rotor (3); or
- an eleventh visual information (95) associated to a second emergency take-off manoeuvre (RTO) to be carried out when said thermal engine (11) is in said at least partial failure condition and only said electric motor (41) is operatively connected to said rotor (3);
said tenth visual information (94) and eleventh visual information (95) comprising a first portion (59) in common, associated to a first stretch (59) in common of said first emergency manoeuvre (LRTO) and said second emergency manoeuvre (RTO), and along which said helicopter (1) increases its height over said take-off area (FATO) from an initial value to a first value (H1); said first value (H1) being reached at a first position (P1) on said take-off area (FATO);
said tenth visual information (94) further comprising:
- a second portion (60), which is associated to a second stretch (60) consecutive and partially extending over said first stretch (59) of said first emergency manoeuvre (LTRO); said helicopter (1) further increasing its height over said take-off area (FATO) from said first value (H1) to a second value (H_{TEP}) along said second stretch (60); and
- a third portion (61), which is associated to a third stretch (61) consecutive to said second stretch (60) and along which said helicopter (1) varies its height over said take-off area (FATO) from said second value (H_{TEP}) to a zero-value reached at said first position (P1);
said human-machine interface (50) further comprising, in turn:
- a twelfth indication (96) associated to a distance (LTRO max distance) between the first position (P1) and the second position (P2) measured on said take-off area (FATO);
- a thirteenth indication (97) associated to said second value (H_{TEP}) ;
said eleventh visual information (95) comprising:
- a fourteenth indication (70) associated to a fourth stretch (70) of said second emergency manoeuvre (RTO), along which said helicopter (1) increases its height over said take-off area (FATO) from said first value (H1) reached at said first position (P1) on said take-off area (FATO) to a fourth value (H_{TDP}) lower than third value (H_{TEP}) and reached at a third position (P5) on said take-off area (FATO); and
- a fifteenth portion (71) associated to a fifth stretch (71) of said second emergency manoeuvre (RTO), along which said helicopter (1) decreases its height over said take-off area (FATO) from said third value (H_{TEP}) to a zero value reached at a fourth position (P6) on said take-off area (FATO); said fourth position (P6) being interposed between said first position (P1) and said third position (P5);
said human-machine interface (50) further comprising:
- a sixteenth indication (98) associated to the distance (TODR) between the first position (P1) and said position (P6) measured on said take-off area (FATO); and
- an eighteenth indication (99) associated to said fourth value (H_{TDP}) of said height on said take-off area (FATO) reached at said third position (P5).

17. A helicopter (1), comprising:
- at least one thermal engine (11);
- at least one rotor (3), which is operatively connectable to said thermal engine;
- an emergency system (40) comprising, at least one electric motor (41), which is operatively connectable to said rotor (3) and controlled by power electronic (43) and an electrical power source (42), which is electrically connected to said electric motor (41) and said power electronic (43);
- a control unit (15) programmed for operatively connecting said thermal engine (11) to said rotor (3) and keeping said electric motor (41) disconnected by said rotor (3) or idle, in a normal operating condition of said thermal engine (11);
**characterized in that** said control unit (15) is also programmed to carry out steps i)-xxvi) according to any one of claim 1 to 13.

18. The helicopter of claim 17, **characterized by** further comprising:
- a first sensor (53) capable of detecting said current rotational speed (ω) of said rotor (3);
- an avionic unit (20) adapted to set said required rotational speed (ω_{SET}) for said rotor (3);
- a first speed controller (54) adapted to adjust a first torque (τ_{ES}) provided by said electric motor (41); and
- a second speed controller (55) adapted to adjust a second torque (τ_{T/S}) provided by thermal engine (11);
said first speed controller (54) and said second speed controller (55) receiving, in use, in input said required rotational speed (ω_{SET}) by said avionic unit (20) and said current value of said rotational speed (ω) of said rotor (3) by said sensor (53), and being adapted to adjust respectively said first torque (τ_{ES}) and said second torque (τ_{T/S}), in order to minimize a rotational speed error (ω_{ERR}) between said required rotational speed (ω_{SET}) and said current value (ω) of said rotational speed of said rotor (3);
said helicopter (1) further comprising:
- a second sensor (45) capable of detecting a temperature (IIT) of said thermal engine (11);
- a third sensor (46) capable of detecting a torque (τ_{T/S}) provided by of said thermal engine (11); and
- a fourth sensor (47) capable of detecting a torque (τ_{MCS}) available at a gearbox (25) operatively connecting said thermal engine (11) to said rotor (3).

## Amended claims

### Amended claims in accordance with Rule 137(2) EPC.

**1.** A method of controlling a helicopter (1), said helicopter (1) comprising:
- at least one thermal engine (11);
- at least one rotor (3), which is operatively connectable to said thermal engine (11) to be driven, in use, at a set rotational speed (ω_{SET}); and
- an emergency system (40) comprising, in turn:
at least one electric motor (41), which is operatively connectable to said rotor (3);
an electrical power source (42), which is electrically connected to said electric motor (41);
said method comprising the steps of:
i) operatively connecting said thermal engine (11) to said rotor (3) and keeping said electric motor (41) disconnected from said rotor (3) and idle, in a normal operating condition of said thermal engine (11);
**characterized by** comprising the steps of:
ii) detecting if said thermal engine (11) is in a partial failure condition and a shut down of said thermal engine (11); and
iii) accelerating said electric motor (41) up to when said current rotational speed (ω) equals said set value (ω_{SET}), in case of said partial failure of said thermal engine (11);
said step iii) comprising the steps of:
iv) sensing a plurality of first parameters (ω, ω_{ERR}, ϕ, ϕ_{ERR}, IIT, τ_{τ/S}, τ_{MGB}, P_{τ/S}, P_{MGB}) of said thermal engine (11) and said rotor (3); and
v) identifying an at least partial failure of said thermal engine (11), on the basis of at least one of said first parameters (ω, ω_{ERR}, ϕ, ϕ_{ERR}, IIT, τ_{τ/S}, τ_{MGB}, P_{τ/S}, P_{MGB});
said first parameters (ω, ω_{ERR}, ϕ, ϕ_{ERR}, IIT, τ, P_{/S}, P_{MGB}) comprising at least:
- a first rotational speed (ω) of said thermal engine (11) and said rotor (3);
- a difference (ω_{ERR}) between said current rotational speed (ω) and a set value (ω_{SET}), and its time derivative (ϕ_{ERR});
- a temperature (IIT) of said thermal engine (11);
- a first torque (τ_{T/S}) provided, in use, by said thermal engine (11);
- a second torque (τ_{MGB}) available, in use, to a gearbox (25) operatively connecting said thermal engine (11) to said rotor (3);
- a first power (P_{T/S}) provided, in use, by said thermal engine (11); and
- a second power (P_{MCB}) available, in use, to said gearbox (25).

**2.** The method of claim 1, **characterized by** comprising the step vi) of identifying a shut-down of said thermal engine (11) in case the absolute value of said time derivative (ϕ_{ERR}) is higher than a first threshold value (ϕ_{ERRTH}) or in case said current rotational speed (ω) is lower than a second threshold value (ω_{TH}); and/or
**characterized by** comprising the step vii) of identifying a partial failure of said thermal engine (11), in case:
- said time derivative (ϕ_{ERR}) of said difference (ω_{ERR}) is not strictly positive, and said first torque (τ_{T/S}) or first power (P_{T/S}) of said thermal engine (11) is lower than a respective maximum value (τ_{T/S MAX}; P_{T/S MAX}) for an overall time (ΔT) greater than a predefined time (ΔT_{TH}) function of said temperature (IIT) of said thermal engine (11); said maximum value (τ_{T/S MAX}; P_{T/S MAX}) being function of outside pressure (PALT) and outside temperature (OAT); and
- said difference (ω_{ERR}) is greater than a threshold value (ω_{ERRTH}), and said first torque (τ_{T/S}) or first power (P_{T/S}) of said thermal engine (11) is lower than said respective maximum values (τ_{T/S MAX}; P_{T/S MAX}) for said overall time (ΔT).

**3.** The method of any one of claims 1 or 2, **characterized in that** said step i) comprises the further steps of:
viii) verifying a first status (SoC, SoH) of said electrical power source (42); and
ix) verifying a second status of said thermal engine (11).

**4.** The method of any one of the foregoing claims, **characterized by** comprising the steps of:
x) checking if said electric motor (41) and a power electronic (43) is in an operative or in failure condition before said step ii); said power electronic (43) electrically controlling said electric motor (41);
said step ii) being carried out only if said emergency system (40) is in proper operative condition after said step ix);
said method comprising the further steps of:
xi) checking if said helicopter (1) is outside a single engine operative envelope (14) of said helicopter (1) with only said thermal engine (11) connected to said rotor (3);
xii) if said helicopter (1) is outside said single engine operative envelope (14) with only said thermal engine (11) providing power to rotor (3), controlling said helicopter (1) in such a way that said helicopter (1) is flown in said single engine operative envelope (14); and
xiii) if said helicopter (1) in inside said single engine operative envelope (14) with only said thermal engine (11) providing power to rotor (3), continuing to fly said helicopter (1) with only said thermal engine (11) connected to said rotor (3);
said steps xi), xii) and xiii) being carried out only if said emergency system (40) is in failure condition after said step xi);
said steps xi), xii) and xiii) being carried out at step i) .

**5.** The method of any one of the foregoing claims, **characterized by** comprising further steps of:
xiv) identifying a flight condition of said helicopter (1);
said method further comprising the steps of alternatively:
xv) in case said flight condition is a take-off, displaying on a human-machine interface (50), a first indication (94, 96) associated to a first emergency manoeuvre (LRTO) of said helicopter (1) and/or a second indication (95, 99) associated to a second emergency manoeuvre (RTO) of said helicopter (1); or
xvi) in case said flight condition is a cruise flight, displaying on said human-machine interface (50), a second indication (93) associated to an area reachable by said helicopter (1) in case of failure of said thermal engine (11) and with only electrical motor (41) driving said rotor (3); or
xvii) in case said flight condition is landing, displaying on said human-machine interface (50) only a stretch (67) of said first indication (94, 96) associated to a descending path of said helicopter (1).

**6.** The method of any one of the foregoing claims, **characterized in that** any one of steps i) to xvii) is carried during the flight of said helicopter (1).

**7.** The method of any one the foregoing claims, comprising the further steps of:
xviii) pre-checking if said emergency system (40) is in said operative condition or in failure condition;
xix) determining, in case said emergency system (40) is in said operative condition, on the basis of first parameters (SoC, SoH) associated to the operative condition of said electric storage (42) and second parameters (OAT, ALT) associated to the external environment conditions, if said helicopter (1) can carry out said emergency manoeuvre (LRTO) when said thermal engine (11) is in said in failure condition and only said electric motor (41) is operatively connected to said rotor (3).

**8.** The method of claim 7, **characterized in that** said step xix) comprises steps of:
xx) elaborating a first value of the power and energy required (Power required, Energy required) by said emergency manoeuvre by said first and second emergency manoeuvres (LRTO) and (RTO); and
xxi) elaborating a second value of the power and energy available (Power available, Energy available) for said electric motor (41), electric storage (42) and power electronic (43); and
xxii) determining that said helicopter (1) can carry out said emergency take-off manoeuvre (LRTO) when said thermal engine (11) is in said at least partial operative condition and only said electric motor (41) is operatively connected to said rotor (3), in case said second values (Power available, Energy available) are greater than said first values (Power required, Energy required).

**9.** The method of claim 8, **characterized in that** said emergency take-off manoeuvre (LRTO) comprises:
- a first stretch (60), along which said helicopter (1) increases its height over said take-off area (FATO) from a third value (H1) reached at a first position (P1) to a fourth value (H_{TEP}) reached at a second position (P2) along said second stretch (60);
- a second stretch (61) consecutive to said first stretch (60), and comprising, in turn:
a first portion (65) extending from said second position (P2) to a third position (P3); and
a second portion (66) extending from said third position (P3) to a fourth position (P4); and
a third portion (67) extending from said fourth position (P4) to said first position (P1) reached at null height on said take-off area (FATO).

**10.** The method of any one of claims 7 to 9, **characterized in that** any one of steps xviii) to xxii) is carried out on-ground and before steps i) to xvii).

**11.** The method of any one of the foregoing claims, **characterized in that** said step i) comprises, in turn, the steps of:
xxiii) keeping said electric motor (41) idle during a take-off manoeuvre; and
xxiv) keeping said electric motor (41) disconnected from said thermal engine during said cruise flight;
said step xxiii) comprising, in turn, the sub-steps of:
xxv) providing a substantially null third torque value (τ_{EL}) by means of said electric motor (41);
xxvi) driving said electric motor (41) at a second rotational speed (ω_{EL}) equal to a third rotational speed at an input of a main gearbox (MGB) interposed between said thermal engine (11) and electric motor (41) and said rotor (3).

**12.** A human-machine interface (50) for a helicopter (1); said helicopter (1) comprising:
- at least one thermal engine (11);
- at least one rotor (3), which is operatively connectable to said thermal engine (11);
- an emergency system (40) comprising, in turn:
at least one electric motor (41), which is operatively connectable to said rotor (3); and
an electrical power source (42), which is electrically connected to said electric motor (41);
said thermal engine (11) being operatively connected to said rotor (3) and said electrical motor (41) being disconnected by said rotor (3) or idle, in a normal operating condition of said thermal engine;
- a first manual command (80), which can be operated to manually activate said emergency system (40);
- a second command ARM (81) operable to arm said emergency system (40);
- a first indication (82) associated to the fact that said emergency system (40) is active and so said electric motor (41) is connected to said rotor (3); ):
- a second indication (85) associated to a state of charge (SoC) of said electrical power source (42);
- a third indication (86) associated to a temperature of said electrical power source (42);
- a fourth indication (87) associated to a temperature of said electrical motor (41);
- a fifth indication (91) associated to time lapsed as of when said electric motor (41) has been connected to said rotor (3); and
- a sixth indication (92) associated to a remaining time for which said electric motor (41) can still drive said rotor (3).

**13.** The human-machine interface of claim 12, **characterized by** comprising a visual seventh indication (93) associated to an area reachable by said helicopter (1) in case of at least partial failure of said thermal engine (11) and with said emergency system (40) active and, therefore, said electrical motor (41) operatively connected with said rotor (3);
said visual representation (93) comprising, in turn:
- a map (110) of the terrain;
- an eight indication (111) superimposed to said map (110) and associated to the position of said helicopter (1) with respect to said terrain; and
- a ninth indication (112) superimposed to said map (110) and associated to an area that can be reached by said helicopter (1), in case of failure of said thermal engine (11) and with only electrical motor (41) driving said rotor (3).

**14.** The human-machine interface of any one of claims 12 or 13, **characterized by** comprising:
- a first line (120) associated to a take-off area (FATO);
- a tenth visual information (94) associated to a first emergency take-off manoeuvre (LRTO) to be carried out when said thermal engine (11) is in at least partial failure condition and only said electric motor (41) is operatively connected to said rotor (3); or
- an eleventh visual information (95) associated to a second emergency take-off manoeuvre (RTO) to be carried out when said thermal engine (11) is in said at least partial failure condition and only said electric motor (41) is operatively connected to said rotor (3);
said tenth visual information (94) and eleventh visual information (95) comprising a first portion (59) in common, associated to a first stretch (59) in common of said first emergency manoeuvre (LRTO) and said second emergency manoeuvre (RTO), and along which said helicopter (1) increases its height over said take-off area (FATO) from an initial value to a first value (H1); said first value (H1) being reached at a first position (P1) on said take-off area (FATO);
said tenth visual information (94) further comprising:
- a second portion (60), which is associated to a second stretch (60) consecutive and partially extending over said first stretch (59) of said first emergency manoeuvre (LTRO); said helicopter (1) further increasing its height over said take-off area (FATO) from said first value (H1) to a second value (H_{TEP}) along said second stretch (60); and
- a third portion (61), which is associated to a third stretch (61) consecutive to said second stretch (60) and along which said helicopter (1) varies its height over said take-off area (FATO) from said second value (H_{TEP}) to a zero-value reached at said first position (P1);
said human-machine interface (50) further comprising, in turn:
- a twelfth indication (96) associated to a distance (LTRO max distance) between the first position (P1) and the second position (P2) measured on said take-off area (FATO);
- a thirteenth indication (97) associated to said second value (H_{TEP});
said eleventh visual information (95) comprising:
- a fourteenth indication (70) associated to a fourth stretch (70) of said second emergency manoeuvre (RTO), along which said helicopter (1) increases its height over said take-off area (FATO) from said first value (H1) reached at said first position (P1) on said take-off area (FATO) to a fourth value (H_{TDP}) lower than third value (H_{TEP}) and reached at a third position (P5) on said take-off area (FATO); and
- a fifteenth portion (71) associated to a fifth stretch (71) of said second emergency manoeuvre (RTO), along which said helicopter (1) decreases its height over said take-off area (FATO) from said third value (H_{TEP}) to a zero value reached at a fourth position (P6) on said take-off area (FATO); said fourth position (P6) being interposed between said first position (P1) and said third position (P5);
said human-machine interface (50) further comprising:
- a sixteenth indication (98) associated to the distance (TODR) between the first position (P1) and said position (P6) measured on said take-off area (FATO); and
- an eighteenth indication (99) associated to said fourth value (H_{TDP}) of said height on said take-off area (FATO) reached at said third position (P5).

**15.** A helicopter (1), comprising:
- at least one thermal engine (11);
- at least one rotor (3), which is operatively connectable to said thermal engine;
- an emergency system (40) comprising, at least one electric motor (41), which is operatively connectable to said rotor (3) and controlled by power electronic (43) and an electrical power source (42), which is electrically connected to said electric motor (41) and said power electronic (43);
- a control unit (15) programmed for operatively connecting said thermal engine (11) to said rotor (3) and keeping said electric motor (41) disconnected by said rotor (3) or idle, in a normal operating condition of said thermal engine (11);
said thermal engine (11) being operatively connected to said rotor (3), and said electric motor (41) being disconnected from said rotor (3) and idle, in a normal operating condition of said thermal engine (11);
said helicopter (1) further comprising:
- a first sensor (53) capable of detecting said current rotational speed (ω) of said rotor (3);
- a second sensor (45) capable of detecting a temperature (IIT) of said thermal engine (11);
- a third sensor (46) capable of detecting a torque (τ_{T/S}) provided by of said thermal engine (11); and
- a fourth sensor (47) capable of detecting a torque (τ_{MGB}) available at a gearbox (25) operatively connecting said thermal engine (11) to said rotor (3);
**characterized in that** said control unit (15) is also programmed to carry out steps ii)-iii) and v)-xxvi) according to any one of claim 1 to 11.

**16.** The helicopter of claim 15, **characterized by** further comprising:
- an avionic unit (20) adapted to set said required rotational speed (ω_{SET}) for said rotor (3);
- a first speed controller (54) adapted to adjust a first torque (τ_{ES}) provided by said electric motor (41); and
- a second speed controller (55) adapted to adjust a second torque (τ_{T/S}) provided by thermal engine (11);
said first speed controller (54) and said second speed controller (55) receiving, in use, in input said required rotational speed (ω_{SET}) by said avionic unit (20) and said current value of said rotational speed (ω) of said rotor (3) by said first sensor (53), and being adapted to adjust respectively said first torque (τ_{ES}) and said second torque (τ_{T/S}), in order to minimize a rotational speed error (ω_{ERR}) between said required rotational speed (ω_{SET}) and said current value (ω) of said rotational speed of said rotor (3).

**1.** A method of controlling a helicopter (1), said helicopter (1) comprising:
- at least one thermal engine (11);
- at least one rotor (3), which is operatively connectable to said thermal engine (11) to be driven, in use, at a set rotational speed (ω_{SET}); and
- an emergency system (40) comprising, in turn:
at least one electric motor (41), which is operatively connectable to said rotor (3);
an electrical power source (42), which is electrically connected to said electric motor (41);
said method comprising the steps of:
i) operatively connecting said thermal engine (11) to said rotor (3) and keeping said electric motor (41) disconnected from said rotor (3) and idle, in a normal operating condition of said thermal engine (11);
**characterized by** comprising the steps of:
ii) detecting if said thermal engine (11) is in at least one partial failure condition; and
iii) accelerating said electric motor (41) up to when said current rotational speed (ω) equals said set value (ω_{SET}), in case of said partial failure of said thermal engine (11);
said step iii) comprising the steps of:
iv) sensing a plurality of first parameters (ω, ω_{ERR}, ϕ, ϕ_{ERR}, IIT, τ_{τ/S}, τ_{MGB}, P_{τ/S}, P_{MCB}) of said thermal engine (11) and said rotor (3); and
v) identifying an at least partial failure of said thermal engine (11), on the basis of at least one of said first parameters (ω, ω_{ERR}, ϕ, ϕ_{ERR}, IIT, τ_{τ/S}, τ_{MGB}, P_{τ/S}, P_{MGB});
said first parameters (ω, ω_{ERR}, ϕ, ϕ_{ERR}, IIT, τ, P_{/S}, P_{MGB}) comprising at least:
- a first rotational speed (ω) of said thermal engine (11) and said rotor (3);
- a difference (ω_{ERR}) between said current rotational speed (ω) and a set value (ω_{SET}), and its time derivative (ϕ_{ERR});
- a temperature (IIT) of said thermal engine (11);
- a first torque (τ_{T/S}) provided, in use, by said thermal engine (11);
- a second torque (τ_{MGB}) available, in use, to a gearbox (25) operatively connecting said thermal engine (11) to said rotor (3);
- a first power (P_{T/S}) provided, in use, by said thermal engine (11); and
- a second power (P_{MCB}) available, in use, to said gearbox (25);
said method furthercomprising the step vi) of identifying a shut-down of said thermal engine (11) in case the absolute value of said time derivative (ϕ_{ERR}) is higher than a first threshold value (ϕ_{ERRTH}) or in case said current rotational speed (ω) is lower than a second threshold value (ω_{TH}); and
the step vii) of identifying a partial failure of said thermal engine (11), in case:
- said time derivative (ϕ_{ERR}) of said difference (ω_{ERR}) is not strictly positive, and said first torque (τ_{T/S}) or first power (P_{T/S}) of said thermal engine (11) is lower than a respective maximum value (τ_{T/S MAX}; P_{T/S MAX}) for an overall time (ΔT) greater than a predefined time (ΔT_{TH}) function of said temperature (IIT) of said thermal engine (11); said maximum value (τ_{T/S MAX}; P_{T/S MAX}) being function of outside pressure (PALT) and outside temperature (OAT); and
- said difference (ω_{ERR}) is greater than a threshold value (ω_{ERRTH}), and said first torque (τ_{T/S}) or first power (P_{T/S}) of said thermal engine (11) is lower than said respective maximum values (τ_{T/S MAX}; P_{T/S MAX}) for said overall time (ΔT).

**2.** The method of any one of claim 1, **characterized in that** said step i) comprises the further steps of:
viii) verifying a first status (SoC, SoH) of said electrical power source (42); and
ix) verifying a second status of said thermal engine (11).

**3.** The method of any one of the claim 1 or 2, **characterized by** comprising the steps of:
x) checking if said electric motor (41) and a power electronic (43) is in an operative or in failure condition before said step ii); said power electronic (43) electrically controlling said electric motor (41);
said step ii) being carried out only if said emergency system (40) is in proper operative condition after said step ix);
said method comprising the further steps of:
xi) checking if said helicopter (1) is outside a single engine operative envelope (14) of said helicopter (1) with only said thermal engine (11) connected to said rotor (3);
xii) if said helicopter (1) is outside said single engine operative envelope (14) with only said thermal engine (11) providing power to rotor (3), controlling said helicopter (1) in such a way that said helicopter (1) is flown in said single engine operative envelope (14); and
xiii) if said helicopter (1) in inside said single engine operative envelope (14) with only said thermal engine (11) providing power to rotor (3), continuing to fly said helicopter (1) with only said thermal engine (11) connected to said rotor (3);
said steps xi), xii) and xiii) being carried out only if said emergency system (40) is in failure condition after said step xi);
said steps xi), xii) and xiii) being carried out at step i) .

**4.** The method of any one of the foregoing claims, **characterized by** comprising further steps of:
xiv) identifying a flight condition of said helicopter (1);
said method further comprising the steps of alternatively:
xv) in case said flight condition is a take-off, displaying on a human-machine interface (50), a first indication (94, 96) associated to a first emergency manoeuvre (LRTO) of said helicopter (1) and/or a second indication (95, 99) associated to a second emergency manoeuvre (RTO) of said helicopter (1); or
xvi) in case said flight condition is a cruise flight, displaying on said human-machine interface (50), a second indication (93) associated to an area reachable by said helicopter (1) in case of failure of said thermal engine (11) and with only electrical motor (41) driving said rotor (3); or
xvii) in case said flight condition is landing, displaying on said human-machine interface (50) only a stretch (67) of said first indication (94, 96) associated to a descending path of said helicopter (1).

**5.** The method of any one of the foregoing claims, **characterized in that** any one of steps i) to xvii) is carried during the flight of said helicopter (1).

**6.** The method of any one the foregoing claims, comprising the further steps of:
xviii) pre-checking if said emergency system (40) is in said operative condition or in failure condition;
xix) determining, in case said emergency system (40) is in said operative condition, on the basis of first parameters (SoC, SoH) associated to the operative condition of said electric storage (42) and second parameters (OAT, ALT) associated to the external environment conditions, if said helicopter (1) can carry out said emergency manoeuvre (LRTO) when said thermal engine (11) is in said in failure condition and only said electric motor (41) is operatively connected to said rotor (3).

**7.** The method of claim 6, **characterized in that** said step xix) comprises steps of:
xx) elaborating a first value of the power and energy required (Power required, Energy required) by said emergency manoeuvre by said first and second emergency manoeuvres (LRTO) and (RTO); and
xxi) elaborating a second value of the power and energy available (Power available, Energy available) for said electric motor (41), electric storage (42) and power electronic (43); and
xxii) determining that said helicopter (1) can carry out said emergency take-off manoeuvre (LRTO) when said thermal engine (11) is in said at least partial operative condition and only said electric motor (41) is operatively connected to said rotor (3), in case said second values (Power available, Energy available) are greater than said first values (Power required, Energy required).

**8.** The method of claim 7, **characterized in that** said emergency take-off manoeuvre (LRTO) comprises:
- a first stretch (60), along which said helicopter (1) increases its height over said take-off area (FATO) from a third value (H1) reached at a first position (P1) to a fourth value (H_{TEP}) reached at a second position (P2) along said second stretch (60);
- a second stretch (61) consecutive to said first stretch (60), and comprising, in turn:
a first portion (65) extending from said second position (P2) to a third position (P3); and
a second portion (66) extending from said third position (P3) to a fourth position (P4); and
a third portion (67) extending from said fourth position (P4) to said first position (P1) reached at null height on said take-off area (FATO).

**9.** The method of any one of claims 6 to 8, **characterized in that** any one of steps xviii) to xxii) is carried out on-ground and before steps i) to xvii).

**10.** The method of any one of the foregoing claims, **characterized in that** said step i) comprises, in turn, the steps of:
xxiii) keeping said electric motor (41) idle during a take-off manoeuvre; and
xxiv) keeping said electric motor (41) disconnected from said thermal engine during said cruise flight;
said step xxiii) comprising, in turn, the sub-steps of:
xxv) providing a substantially null third torque value (τ_{EL}) by means of said electric motor (41);
xxvi) driving said electric motor (41) at a second rotational speed (ω_{EL}) equal to a third rotational speed at an input of a main gearbox (MGB) interposed between said thermal engine (11) and electric motor (41) and said rotor (3).

**11.** A human-machine interface (50) for a helicopter (1); said helicopter (1) comprising:
- at least one thermal engine (11);
- at least one rotor (3), which is operatively connectable to said thermal engine (11);
- an emergency system (40) comprising, in turn:
at least one electric motor (41), which is operatively connectable to said rotor (3); and
an electrical power source (42), which is electrically connected to said electric motor (41);
said thermal engine (11) being operatively connected to said rotor (3) and said electrical motor (41) being disconnected by said rotor (3) or idle, in a normal operating condition of said thermal engine;
- a first manual command (80), which can be operated to manually activate said emergency system (40);
- a second command ARM (81) operable to arm said emergency system (40);
- a first indication (82) associated to the fact that said emergency system (40) is active and so said electric motor (41) is connected to said rotor (3); ):
- a second indication (85) associated to a state of charge (SoC) of said electrical power source (42);
- a third indication (86) associated to a temperature of said electrical power source (42);
- a fourth indication (87) associated to a temperature of said electrical motor (41);
- a fifth indication (91) associated to time lapsed as of when said electric motor (41) has been connected to said rotor (3); and
- a sixth indication (92) associated to a remaining time for which said electric motor (41) can still drive said rotor (3).

**12.** The human-machine interface of claim 11, **characterized by** comprising a visual seventh indication (93) associated to an area reachable by said helicopter (1) in case of at least partial failure of said thermal engine (11) and with said emergency system (40) active and, therefore, said electrical motor (41) operatively connected with said rotor (3);
said visual representation (93) comprising, in turn:
- a map (110) of the terrain;
- an eight indication (111) superimposed to said map (110) and associated to the position of said helicopter (1) with respect to said terrain; and
- a ninth indication (112) superimposed to said map (110) and associated to an area that can be reached by said helicopter (1), in case of failure of said thermal engine (11) and with only electrical motor (41) driving said rotor (3).

**13.** The human-machine interface of any one of claims 11 or 12, **characterized by** comprising:
- a first line (120) associated to a take-off area (FATO);
- a tenth visual information (94) associated to a first emergency take-off manoeuvre (LRTO) to be carried out when said thermal engine (11) is in at least partial failure condition and only said electric motor (41) is operatively connected to said rotor (3); or
- an eleventh visual information (95) associated to a second emergency take-off manoeuvre (RTO) to be carried out when said thermal engine (11) is in said at least partial failure condition and only said electric motor (41) is operatively connected to said rotor (3);
said tenth visual information (94) and eleventh visual information (95) comprising a first portion (59) in common, associated to a first stretch (59) in common of said first emergency manoeuvre (LRTO) and said second emergency manoeuvre (RTO), and along which said helicopter (1) increases its height over said take-off area (FATO) from an initial value to a first value (H1); said first value (H1) being reached at a first position (P1) on said take-off area (FATO);
said tenth visual information (94) further comprising:
- a second portion (60), which is associated to a second stretch (60) consecutive and partially extending over said first stretch (59) of said first emergency manoeuvre (LTRO); said helicopter (1) further increasing its height over said take-off area (FATO) from said first value (H1) to a second value (H_{TEP}) along said second stretch (60); and
- a third portion (61), which is associated to a third stretch (61) consecutive to said second stretch (60) and along which said helicopter (1) varies its height over said take-off area (FATO) from said second value (H_{TEP}) to a zero-value reached at said first position (P1);
said human-machine interface (50) further comprising, in turn:
- a twelfth indication (96) associated to a distance (LTRO max distance) between the first position (P1) and the second position (P2) measured on said take-off area (FATO);
- a thirteenth indication (97) associated to said second value (H_{TEP});
said eleventh visual information (95) comprising:
- a fourteenth indication (70) associated to a fourth stretch (70) of said second emergency manoeuvre (RTO), along which said helicopter (1) increases its height over said take-off area (FATO) from said first value (H1) reached at said first position (P1) on said take-off area (FATO) to a fourth value (H_{TDP}) lower than third value (H_{TEP}) and reached at a third position (P5) on said take-off area (FATO); and
- a fifteenth portion (71) associated to a fifth stretch (71) of said second emergency manoeuvre (RTO), along which said helicopter (1) decreases its height over said take-off area (FATO) from said third value (H_{TEP}) to a zero value reached at a fourth position (P6) on said take-off area (FATO); said fourth position (P6) being interposed between said first position (P1) and said third position (P5);
said human-machine interface (50) further comprising:
- a sixteenth indication (98) associated to the distance (TODR) between the first position (P1) and said position (P6) measured on said take-off area (FATO); and
- an eighteenth indication (99) associated to said fourth value (H_{TDP}) of said height on said take-off area (FATO) reached at said third position (P5).

**14.** A helicopter (1), comprising:
- at least one thermal engine (11);
- at least one rotor (3), which is operatively connectable to said thermal engine;
- an emergency system (40) comprising, at least one electric motor (41), which is operatively connectable to said rotor (3) and controlled by power electronic (43) and an electrical power source (42), which is electrically connected to said electric motor (41) and said power electronic (43);
- a control unit (15) programmed for operatively connecting said thermal engine (11) to said rotor (3) and keeping said electric motor (41) disconnected by said rotor (3) or idle, in a normal operating condition of said thermal engine (11);
said thermal engine (11) being operatively connected to said rotor (3), and said electric motor (41) being disconnected from said rotor (3) and idle, in a normal operating condition of said thermal engine (11);
said helicopter (1) further comprising:
- a first sensor (53) capable of detecting said current rotational speed (ω) of said rotor (3);
- a second sensor (45) capable of detecting a temperature (IIT) of said thermal engine (11);
- a third sensor (46) capable of detecting a torque (τ_{T/S}) provided by of said thermal engine (11); and
- a fourth sensor (47) capable of detecting a torque (τ_{MGB}) available at a gearbox (25) operatively connecting said thermal engine (11) to said rotor (3);
**characterized in that** said control unit (15) is also programmed to carry out steps ii)-iii) and v)-xxvi) according to any one of claim 1 to 10.

**15.** The helicopter of claim 14, **characterized by** further comprising:
- an avionic unit (20) adapted to set said required rotational speed (ω_{SET}) for said rotor (3);
- a first speed controller (54) adapted to adjust a first torque (τ_{ES}) provided by said electric motor (41); and
- a second speed controller (55) adapted to adjust a second torque (τ_{T/S}) provided by thermal engine (11);
said first speed controller (54) and said second speed controller (55) receiving, in use, in input said required rotational speed (ω_{SET}) by said avionic unit (20) and said current value of said rotational speed (ω) of said rotor (3) by said first sensor (53), and being adapted to adjust respectively said first torque (τ_{ES}) and said second torque (τ_{T/S}), in order to minimize a rotational speed error (ω_{ERR}) between said required rotational speed (ω_{SET}) and said current value (ω) of said rotational speed of said rotor (3).
